# EUROPEAN PATENT SPECIFICATION

(11) **EP 4 227 551 B1**
(45) Date of publication and mention of the grant of the patent: **27.11.2024**
(21) Application number: 22156859.5
(22) Date of filing: 15.02.2022
(51) Int. Cl.: F16D 55/224, F16D 55/228, F16D 55/226, F16D 65/18, F16D 55/00

(54) **BRAKE DEVICE FOR A VEHICLE AND METHOD FOR OPERATING SUCH BRAKE DEVICE**
BREMSVORRICHTUNG FÜR EIN FAHRZEUG UND VERFAHREN ZUM BETRIEB EINER SOLCHEN BREMSVORRICHTUNG
DISPOSITIF DE FREINAGE POUR VÉHICULE ET PROCÉDÉ DE FONCTIONNEMENT D'UN TEL DISPOSITIF DE FREINAGE

(43) Date of publication of application: 16.08.2023
(73) Proprietor: KNORR-BREMSE Systeme für Nutzfahrzeuge GmbH, 80809 München (DE)
(72) Inventor: SCHÖFBERGER, Tobias, 84048 Mainburg (DE); SCHALLER, Sebastian, 86462 Langweid (DE); ADAMCZYK, Philipp, 82347 Bernried (DE); BLESSING, Michael, 80687 München (DE); GYÖRKE, Zsombor, 8360 Keszthely (HU); HEIGL, Korbinian, 85652 Pliening (DE); PESCHEL, Michael, 82296 Schöngeising (DE); TOTH, Janos, 6000 Kecskemét (HU); KOKREHEL, Csaba, 1119 Budapest (HU); NAKAMURA, Tatsuro, 1027 Budapest (HU); SZABO, Janos, 1101 Budapest (HU); HÖS, Levente, 1047 Budapest (HU); MONORI, Gyula, 6065 Lakitelek (HU); WINZER, Rainer, 81667 München (DE); HOLLOSI, Mate, 1097 Budapest (HU); KLINGNER, Matthias, 82275 Emmering (DE); KRÜGER, Sven Philip, 81476 München (DE)
(74) Representative: Prüfer & Partner mbB Patentanwälte · Rechtsanwälte

(56) References cited:
- DE-A1- 102018 102 511
- US-A1- 2013 153 343
- US-A1- 2021 348 663

## Description

The present invention relates to a brake device for a vehicle as well as a method for operating the brake device. Additionally, the invention relates to vehicle comprising the brake device and/or performing the method, and a computer program product as well as a storage medium for performing or passing on the method.

Brake devices for vehicles, such as hydraulically actuated wheel brakes, may include an actuator and an application unit which presses friction elements to come into contact with a brake disc. The actuator and the application unit are connected via pipelines and/or tubes, whereby hydraulic pressure is transferred. Due to safety reasons, a parking brake application should not be accomplished hydraulically but has to be operated mechanically. In the case of a fixed caliper, for example, as used for reduction of drag torque, the mechanical parking brake application on an inboard and outboard side of the brake disc becomes quite difficult and requires quite high installation space. Thus, for space-saving reasons either the parking brake will be actuated mechanically only on one side of the brake disc or an additional parking brake caliper is used.

With respect to the avoidance or at least reduction of drag torque generated by the wheel brake, fixed brake calipers are used. However, the use of fixed brake calipers requires the parking brake force to be applied on both the inboard and outboard side of the brake disc. Accordingly, parking brake mechanisms have to be arranged on both sides of the brake disc and therefore on both sides of the fixed brake caliper, which requires an extensive installation space in the braking direction, i.e. the direction of movement of the brake pad towards and away from the brake disc. Such additionally required installation space is especially disadvantageous for battery electric vehicles (BEV), since it limits the installation space for the drive train of such vehicles.

US 2021/348663 A1 discloses a brake assembly comprising a fixed caliper system and a sliding caliper system.

Accordingly, it is an objective of the present invention to provide a brake device with reduced installation space.

This objective is solved by the subject matters of the independent claims. Advantageous modifications are subject to the dependent claims.

According to the invention, a brake device for a vehicle comprises at least one brake disc comprising two opposed radial surfaces with respect to a rotational axis of the at least one brake disc, at least two brake pads each of which facing one of the opposed radial surfaces of the at least one brake disc, at least one brake caliper configured to provide a relative movement of the at least two brake pads towards and away from each other in a braking direction to apply or release a braking torque on or from the at least one brake disc, wherein the at least one brake caliper is configured to provide the relative movement between the at least two brake pads in a primary braking mode and in a secondary braking mode, and a carrier to support the at least one brake caliper. The at least one brake caliper is supported relatively moveable on the carrier in the braking direction. Further, the brake device comprises a holding mechanism configured to prevent the relative movement of the at least one brake caliper with respect to the carrier at least in the primary braking mode and to allow the relative movement of the at least one brake caliper with respect to the carrier at least in the secondary braking mode.

Consequently, the brake caliper operates as a fixed caliper at least in the primary braking mode and as floating brake caliper at least in the secondary braking mode. In other words, the brake caliper can be assumed as hybrid brake caliper capable of being operated in a fixed brake caliper mode and a floating brake caliper mode. The operation of the brake caliper as fixed brake caliper may be not limited to the primary brake mode and may also be applicable for an idle or driving mode as addressed later. Similarly, the operation of the brake caliper as floating caliper may be not limited to the secondary brake mode and may also be applicable for a brake caliper centering mode as addressed later.

The primary braking mode may be a service braking mode to apply a service brake pressure on each of the at least two brake pads arranged on opposed radial surface sides of the brake disc directly or indirectly via intermediate members. In accordance with the application of the service brake pressure, or in general a primary brake pressure, each of the at least two brake pads is moved towards the brake disc. In turn, upon releasing the respective brake pressure, the previously applied brake force is released and the brake pads may move away from the brake disc. Accordingly, the braking direction corresponds to the moving direction of the brake pads to apply and release the brake force or brake torque, respectively.

The secondary braking mode may be a parking braking mode to apply a parking brake pressure on the at least one of the at least two brake pads arranged on opposed radial surface sides of the brake disc directly or indirectly via intermediate members. As the brake caliper is operated as floating caliper in the secondary braking mode, each of the at least two brake pads is moved towards the brake disc in accordance with the application of the parking brake pressure, or in general a secondary brake pressure, even if applying the respective brake pressure only to one of the brake pads. In other words, actuating one of the at least two brake pads by the secondary brake pressure results in an additional actuation of the other brake pad opposed by the brake caliper operated as floating brake caliper.

The present invention is not limited to the primary braking mode being a service braking mode and/or the secondary braking mode being a parking braking mode. In principle, any braking mode may be the primary and/or secondary braking mode, for example, depending on the preferable operation of the brake caliper as fixed brake caliper or floating brake caliper. However, the operation of the brake caliper as floating brake caliper may be especially advantageous in a braking mode as secondary braking mode comprising the use of mechanical actuating members to actuate the at least two brake pads. In turn, the operation of the brake caliper as fixed caliper may be especially advantageous in a braking mode as primary braking mode comprising the use of an fluidic, i.e. a hydraulic or pneumatic, actuation of the at least two brake pads.

For the operation of the brake caliper as fixed caliper requires the brake caliper to be held in a substantially constant position in the braking direction with respect to the brake disc. The term "substantially" refers to technical tolerances, a predetermined clearance or the like that may result in some relative movement ability of the brake caliper without a significant effect on the operation as fixed brake caliper. Since the brake caliper is supported relatively movable on the carrier in the braking direction, the holding mechanism is configured to substantially prevent the relative movement of the brake caliper in the braking direction with respect to the carrier to operate the brake caliper as fixed brake caliper. The holding mechanism may be based on a force-fit and/or form-fit connection between the brake caliper and the carrier. To operate the brake caliper as floating caliper, i.e. to allow a relative movement of the brake caliper with respect to the carrier in the braking direction, the force-fit and/or form-fit connection may be released and/or a respectively applied force of the force-fit connection may be exceeded by a counterforce.

In some embodiments, the at least one brake caliper comprises at least one slave piston for each of the at least two brake pads to actuate the at least two brake pads in the braking direction, wherein the at least one slave piston is arranged on a side of the respective brake pad facing away from the brake disc.

The at least one slave piston is an intermediate member that may be actuated in the braking direction in the primary braking mode and/or secondary braking mode in accordance to a respectively applied brake pressure. In accordance with the respectively applied pressure, the at least one slave piston moves the respectively assigned brake pad towards the brake disc. Preferably, the at least one slave piston is configured to move away from the brake disc in in the braking direction upon release of the applied pressure. Accordingly, it may be advantageous to provide an operative connection between the at least one slave piston and the respectively assigned brake pad to also move the brake pad away from the brake disc upon release of the applied pressure. Such operative connection may be provided by the slave piston comprised by or being mechanically connected to the respectively assigned brake pad.

Preferably, the brake caliper is configured to actuate the at least one slave piston via a primary brake control line, in particular a fluidic primary brake control line.

The primary brake control line may be a conduit to supply a fluid to actuate the at least one slave piston in accordance with the fluidic pressure applied thereby. Accordingly, releasing such fluid via the conduit results in a release of the fluidic pressure and therefore the at least one brake piston. However, the primary brake control line is not limited to a conduit for a fluid supply or discharge but may be any control line to allow an actuation and release of the at least one slave piston due to transmitting an actuation energy, e.g. mechanically. The amount of actuation energy and its respective release may be determined and controlled by a control unit. It is to be noted that an actuation of the at least one slave piston is not limited to the primary brake control line.

The primary brake control line may configured to control any one of the slave pistons as one primary brake control line comprised by or formed in the brake caliper. Alternatively, the brake caliper may comprise several primary brake control lines for each or at least different groups of slave pistons.

Further, the primary brake control line may be associated with the primary brake mode to actuate the at least one slave piston in such mode. However, the primary brake control line may be also used as such or in combination in other operating modes of the brake device.

In some embodiments, the brake device comprises at least one biasing member, preferably at least one spring member, associated with the at least one slave piston and configured to bias the at least one slave piston in the braking direction away from the brake disc.

As previously mentioned, it may be, for example, advantageous to move the at least one slave piston away from the brake disc upon release of a respective brake pressure, preferably together with the respectively assigned brake pad for the avoidance of drag torque. Accordingly, the at least one biasing member applies a retraction force on the at least one slave piston in the braking direction directed away from the brake disc, which moves the at least one slave piston away from the brake disc, if the applied brake force actuating the at least one slave piston towards the brake disc is below the retracting force by the at least one biasing member. For example, the biasing member may be a compression spring arranged between a spring support surface of the brake caliper between the slave piston and the brake pad and a slave piston surface facing the spring support surface. Alternatively or in addition, the biasing member may be a tension spring arranged between a surface of the slave piston facing away from the brake pad and another spring support surface opposed to such surface of the slave piston. Alternatively or in addition, the biasing member may be a tension spring arranged between a surface of the brake pad facing away from the brake disc and a spring support surface of the brake caliper opposed to such surface of the brake pad.

In some embodiments, a secondary brake member is arranged on one radial surface side of the brake disc, preferably an inboard side facing towards the vehicle center, on a side of the respectively arranged at least one slave piston facing away from the respectively arranged at least one brake pad.

Accordingly, the at least one slave piston arranged on the respective radial surface side of the brake disc, on which the secondary braking member is disposed, may be actuated by the secondary brake member or by the secondary brake member and via the primary brake control line. An actuation of the respective at least one slave piston by the secondary brake member and via the primary brake control line may be performed simultaneously and/or sequentially.

The secondary brake member may actuate the at least one slave piston assigned thereto by a mechanical actuation, either directly or indirectly via further intermediate members. Advantageously, the secondary braking member may be therefore associated with the secondary braking mode, preferably the parking braking mode. However, the secondary brake member may also be used in other operating modes.

With respect to the second brake member as brake member in terms of an actuation of the least one slave piston in the secondary braking mode, the brake caliper is operated as floating caliper. Consequently, the arrangement of the second brake member on one radial surface side of the brake disc is sufficient for a braking action. In such event, the at least one slave piston on the side of the secondary brake member is actuated by the secondary brake member while the other at least one slave piston opposed thereto is actuated by the brake caliper configuration. Since only one secondary brake member, e.g. a parking brake member or mechanism, is required, installation space may be significantly reduced. In other words, the secondary brake member may be only disposed on an inboard side of the brake disc facing towards the vehicle center or an outboard side of the brake disc facing away from the vehicle center. Due to space or design constraints, the secondary brake member may be preferably arranged on the inboard side to save installation space on the outboard side.

In some embodiments, the secondary brake member and/or the at least one slave piston comprises a secondary brake adjusting member positioned between the secondary brake member and the at least one slave piston and configured to be expandable in the braking direction.

Accordingly, the secondary brake adjusting member may, for example, compensate for wear of the brake pad to allow the slave piston to be moved in the desired brake position.

In some embodiments, a biasing member, preferably a spring member is arranged on a side of the secondary brake member facing away from the at least one brake disc, and wherein the primary brake control line is preferably configured to control the distance between the secondary brake member and the at least one slave piston.

The biasing member is an example of a mechanical actuation of the secondary brake member, for example, by a compression spring pushing the secondary brake member in the braking direction towards the respective slave piston if the compression spring is released.

Since the secondary brake member is not intended to actuate the respective slave piston for a braking action in any operating mode at any time, the secondary brake member may be kept in a retracted position when no actuation of the respective slave piston is intended. The retracted position may correspond to a distance between the second brake member and the respective slave piston, where the second brake member does not actuate the slave piston to apply a braking force on the brake pad and the brake disc, respectively. Such distance may be controlled by the primary brake control line. For example, the primary brake control line as fluidic primary brake control line supplies a fluid into a space between the secondary brake member and the respectively assigned slave piston. Due to the resulting fluidic pressure, the distance between the secondary brake member and the slave piston may be controlled. The control of the distance between the secondary brake member and the respectively assigned slave piston does not exclude an actuation of the slave piston be the respectively applied pressure via the primary brake control line. In other words, even though the secondary brake member is in the retracted position, the respective slave piston may be actuated otherwise.

Alternatively or in addition, a mechanical locking mechanism for locking the secondary brake member in the retracted position may be provided.

In some embodiments, the brake device, preferably the at least one brake caliper, comprises a secondary brake lock configured to be movable in a secondary brake member locking position to prevent a braking movement of the secondary brake member in the braking direction towards the at least one brake disc and in a secondary brake member release position to allow the braking movement.

The secondary brake lock is an exemplary embodiment of a mechanical locking mechanism for locking the secondary brake member in the retracted position. In such configuration the secondary brake member locking position of the secondary brake lock corresponds to the retracted position of the secondary brake member.

For example, the secondary brake lock may be a bolt member movably incorporated in the brake caliper to project into the motion path of the secondary brake member to block a movement of the secondary brake member beyond the secondary brake lock, here the bolt, in the braking direction towards the slave piston. In other words, the secondary brake lock may form an abutment for the secondary brake member to restrict the movement of the secondary brake member towards the slave piston, if the secondary brake lock is moved in the secondary brake member locking position, e.g. by the projection of the bolt. In turn, to allow a movement of the secondary brake member to apply a braking force, the secondary brake lock may be moved in the secondary brake member release position, for example, by retracting the bolt as exemplary secondary brake lock into the carrier to cancel the projection of the secondary brake lock into the motion path of the secondary brake member effective thereon. Alternative or in addition to the provision of the secondary brake lock by the brake caliper, the secondary brake member may also comprise a secondary brake lock configured to interlock with the brake caliper. The locking effect by the secondary brake lock may be accomplished based on a form-fit and/or force-fit connection.

In some embodiments, the holding mechanism comprises a brake caliper lock configured to be movable in a brake caliper locking position to prevent the relative movement of the at least one brake caliper with respect to the carrier at least in the primary braking mode, and in a brake caliper release position to allow the relative movement of the at least one brake caliper with respect to the carrier at least in the secondary braking mode, preferably by being configured to be actuated via a lock control line, more preferably via a fluidic lock control line.

Accordingly, the brake caliper lock moved into brake caliper locking position allows the brake caliper to be operated as fixed caliper. In turn, when the brake caliper lock is moved in the brake caliper release position, the brake caliper may be operated as floating caliper. For example, the brake caliper lock may be a bolt comprised by the brake caliper to be moved in a projecting position towards the carrier to be received by a recess in the carrier to prevent the relative movement of the at least one brake caliper with respect to the carrier. The interlock between the at least one brake caliper and the carrier with the brake caliper lock in the brake caliper locking position may thereby be achieved due to a form-fit connection. Alternatively or in addition, the interlock between the at least one caliper and the carrier with the brake caliper lock in the brake caliper locking position may be achieved due to a force-fit connection. To operate the brake caliper as floating caliper, the brake caliper lock is moved into the brake caliper release position, e.g. by retracting the bolt as brake caliper lock to cancel the form-fit and/or force-fit engagement of the brake caliper lock with the carrier. Alternatively or in addition to the brake caliper lock being comprised by the brake caliper, the brake caliper lock may also be comprised by the carrier to interlock with the brake caliper in the brake caliper locking position and to release the brake caliper in the brake caliper release position.

Preferably, the movement of the brake caliper lock in the brake caliper locking position and brake caliper release position is controlled via the lock control line, more preferably via a fluidic lock control line. The fluidic lock control line may be a conduit to supply a fluid to move the brake caliper lock in the brake caliper locking position in accordance with the fluidic pressure applied thereby. Accordingly, releasing such fluid via the conduit results in a release of the fluidic pressure and therefore a movement or at least movement ability of the brake caliper lock in the brake caliper release position. However, the lock control line is not limited to a conduit for a fluid supply or discharge but may be any control line to allow a movement of the brake caliper lock in the brake caliper locking and release position due to transmitting an actuation energy, e.g. mechanically. The amount of actuation energy and its respective release may be determined and controlled by a control unit. The control unit may be the same as for the control of the primary brake control line or a separate one.

In some embodiments, the lock control line is comprised by the brake caliper and configured to actuate both the secondary brake lock and the brake caliper lock, preferably by a fluidic lock pressure.

Accordingly, the secondary brake lock and the brake caliper lock can be actuated by one lock control line. For example, the brake caliper may comprise a conduit as lock control line which is branched to supply the fluidic lock pressure to the secondary brake lock by one branch and to the brake caliper lock by the other branch.

Preferably, in the event of the lock control line to control both the secondary brake lock and the brake caliper lock, the secondary brake lock is configured to be moved and/or held in the secondary brake member locking position at a lower fluidic pressure than the fluidic pressure to move and/or hold the brake caliper lock in the brake caliper locking position. Accordingly, the brake caliper lock may be moved in the brake caliper release position by lowering the fluidic lock pressure without moving the secondary brake lock into the secondary brake member release position. Alternatively or in addition, the lock control line comprises a valve or the like to control the fluid pressure in the respective branches accordingly.

The sequence of moving the secondary brake lock and the brake caliper lock differently in dependence on the fluidic pressure may be implemented by different configurations of the secondary brake lock and the brake caliper lock. Such different configurations may relate to geometric dimensions or shapes, materials, weight, surface properties and/or coatings. The secondary brake lock and the brake caliper lock may also be moved substantially simultaneously but may still provide a sequence of the secondary brake lock and the brake caliper lock being moved in a respective locking position and/or release position. For example, the secondary brake lock may provide a longer projection effective to lock the secondary brake member, e.g. by being longer in the projecting direction than the brake caliper lock. Accordingly, upon release of the fluidic pressure, both the secondary brake lock and the brake caliper lock are moving in the direction of their respective release position. However, the secondary brake lock requires a longer moving distance to arrive at the secondary brake member release position due to the different projecting length.

The secondary brake lock and/or the brake caliper lock may be configured to provide the movement in their respective locking and/or release positions only upon applying a significant pressure or force difference. The term significant is intended to exclude slight deviations in pressure or force. Accordingly, an unintentional movement and therefore unlocking and/or locking may be avoided. Alternatively or in addition, a risk of an unintended movement may be reduced by a timer releasing a movement of the secondary brake lock and/or the brake caliper lock only after a pressure or force difference has been applied for a predetermined minimum period of time.

In some embodiments, the holding mechanism comprises a biasing mechanism, preferably at least two spring members each of which being arranged on opposed sides of the brake caliper, configured to bias the brake caliper in a predetermined position on the carrier in the braking direction.

The biasing mechansim may be an alternative to the holding mechanism by the brake caliper lock, wherein the relative position of the brake caliper in the braking direction with respect to the carrier is substantially kept constant as long as the biasing force is not exceeded. For example, the brake caliper is supported on the carrier with two biasing members, such as compression spring members, being arranged on each side of the brake caliper in the braking direction. Each of the biasing members extending in the braking direction are arranged between the respective surface side of the brake caliper and a stationary supporting surface of the carrier opposed to the respective surface side of the brake caliper. Specifically, the carrier may provide a carrier arm extending in the braking direction to support the brake caliper thereon. Accordingly, the biasing members at least partially extend along the carrier arm on opposite sides of the brake caliper portion supported on the carrier arm. Due to the balance of the biasing forces, the position of the brake caliper is held substantially constant to be operated as fixed caliper as long as, for example, an applied braking force does not result in a counterforce exceeding one of the biasing forces. In such event, the brake caliper acts like a floating brake caliper. The biasing mechanism may not only be advantageous to operate the brake caliper as fixed brake caliper or floating brake caliper in accordance with the relative force applied but may also be capable of providing a self-centering ability and/or of avoiding an unwanted relative movement that may result in a contact between the brake disc and a brake pad and therefore drag torque, e.g. during driving, specifically cornering.

In some embodiments, the brake caliper comprises an adjusting member for each of the slave pistons, preferably the secondary brake adjusting member and a further adjusting member for the respectively opposed slave piston.

Accordingly, an adjusting member is arranged on the inboard side as well as on the outboard side. This may be particularly advantageous with respect to the biasing mechanism described above to reduce the risk of an uneven or even one-sided braking. For example, in the secondary braking mode, the secondary brake member applies a braking force on the respective slave piston via the secondary brake adjusting member to apply a corresponding force on the brake disc. In response, the brake caliper tends to operate as floating caliper, which takes effect with the respective resulting counterforce exceeding the biasing force. Without the further adjusting member associated with the salve piston on the side of the brake disc opposed to the secondary brake member, the movement distance and therefore the required resulting counterforce for a bilateral braking in the event of wear of the brake pad assigned to the further adjusting member is increased. In other words, the further adjusting member allows the moving distance of the brake caliper as floating caliper and applicable force to be maintained relatively stable.

As another aspect of the invention, a method for operating the brake device described above is provided, wherein the method comprises the following steps:
holding the at least one brake caliper by the holding mechansim in a predetermined position in the braking direction with respect to the carrier at least in the primary braking mode, and
allowing the relative movement of the at least one brake caliper with respect to the carrier at least in the secondary braking mode.

As already addressed with respect to the brake device, the holding of the at least one brake caliper by the holding mechansim in a predetermined position in the braking direction with respect to the carrier allows to operate the brake caliper as fixed caliper. In turn, allowing the relative movement of the at least one brake caliper with respect to the carrier enables the brake caliper to be operated as floating caliper. With respect to an implementation of such holding and release capabilities it is referred to the description of the brake device. In general, any feature described with respect to the brake device is also applicable to the method for operating the brake device and vice versa. Accordingly, any structural feature may also comprise a functional effect as feature of the method, while any functional feature of the method may be implemented in the brake device by respective device means.

In some embodiments, the primary braking mode is a service braking mode and the secondary braking mode is a parking braking mode.

Since the service braking mode may allow fluid actuation of the brake pads the operation of the brake caliper as fixed caliper may be applied. In turn, to avoid an extensive installation space in a parking brake mode, which may only be allowed to actuate the brake pads mechanically, the brake caliper may be operated as floating brake caliper, which allows to arrange a parking brake member, i.e. the secondary brake member on one side of the caliper only.

In some embodiments, the at least one brake caliper is also held by the holding mechansim in the predetermined position in an idle or driving mode.

Accordingly, the brake caliper may also be operated as fixed caliper in the idle or driving mode. Thereby, drag torque may be avoided or at least reduced.

Alternatively or in addition, the relative movement of the at least one brake caliper with respect to the carrier is also allowed in a brake caliper centering mode to center the brake caliper with respect to the brake disc.

Since the brake caliper may be off-centered with respect to the brake disc, for example, due to being operated as floating caliper in the secondary braking mode, the brake caliper may be re-centered by still being operated as floating brake caliper or by being set in such operating state.

In some embodiments, in the idle or driving mode, the secondary brake lock is in the secondary brake member locking position and the at least one brake caliper is held by the holding mechansim.

Accordingly, the secondary brake member is positioned in the retracted position and the brake caliper is operated as fixed brake caliper.

Alternatively or in addition, in the brake caliper centering mode, the primary brake pressure is released with the secondary brake lock being in the secondary brake member locking position and the relative movement of the at least one brake caliper with respect to the carrier being allowed. Subsequently, applying the primary brake pressure is applied. Then, the primary brake pressure is released with the secondary brake lock being in the secondary brake member locking position and the at least one brake caliper being held by the holding mechansim.

Accordingly, the centering of the brake caliper without any influence by the secondary brake member held in the retracted position but by the primary brake pressure applied on each of the at least one brake pads on each radial surface side of the brake disc to center the brake caliper operated as floating caliper. Preferably, the primary brake pressure is applied evenly on each of the at least one brake pads for such centering, more preferably via one primary brake control line. Due to the holding mechanism, e.g. either by the biasing members or the brake caliper lock being moved in the brake caliper locking position, the brake caliper may be switched from the floating caliper state to the fixed caliper state with the brake caliper being centered.

In some embodiments, in the primary brake mode, a primary brake pressure is applied and released with the secondary brake lock being in the secondary brake member locking position and the at least one brake caliper being held by the holding mechansim.

Accordingly, in the primary brake mode, the braking and release of the brake disc is controlled by the primary brake pressure with the brake caliper being operated as fixed caliper.

Alternatively or in addition, in the secondary brake mode, a secondary brake pressure is applied with the primary brake pressure being released, the secondary brake lock being in the secondary brake member release position and the relative movement of the at least one brake caliper with respect to the carrier being allowed.

Accordingly, in the secondary brake mode, the braking of the brake disc is controlled by the secondary brake pressure with the brake caliper being operated as floating caliper.

Preferably, in the secondary brake mode, the secondary brake pressure is released by applying the primary brake pressure the secondary brake lock being in the secondary brake member release position and the relative movement of the at least one brake caliper with respect to the carrier being allowed. Subsequently, the secondary brake lock is moved in the secondary brake member locking position and the at least one brake caliper is held by the holding mechansim. Then, the primary brake pressure is released with the secondary brake lock being in the secondary brake member locking position and the at least one brake caliper being held by the holding mechansim.

Accordingly, in the secondary brake mode, the secondary brake pressure is released, e.g. from the respective slave piston, by moving the secondary brake member in the retracted position by the primary brake pressure. For example, the primary brake pressure is a fluidic pressure with the fluid being supplied by the primary brake control line in a space between the secondary brake member and the respectively assigned slave piston. In the retracted position, the secondary brake member is locked by the secondary brake lock being moved in the secondary brake member locking position and the operating state from the brake caliper is switched from the floating caliper state to the fixed caliper state. Subsequently, the primary brake pressure is released for any further operation of the brake caliper.

As another aspect of the invention, a vehicle for performing the method described above is provided, wherein the vehicle comprises the device described above.

The vehicle preferably comprise individual features listed in the above description of the brake device and the method.

As another aspect of the invention, a computer program product having code means, which, when being executed on a data processing unit, cause it to execute the method described above, is provided. The data processing unit is preferably a data processing unit provided in the above-described brake device or vehicle. Thus, also an existing device, such as a drive control device or a brake control device, may be adapted to perform the method described above.

As another aspect of the invention, a storage medium for being read by a data processing unit is provided, wherein the storage medium comprises a computer program product as described above. Thereby, the invention may be passed on. The storage medium preferably comprises an USB stick, a memory card and/or a CD-ROM.

The following is a description of preferred embodiments of the invention with reference to the accompanying drawings.

In detail:
Fig. 1 is a schematic cross-sectional view of a brake device according to a first embodiment of the invention;
Fig. 2 is the brake device shown in Fig. 1 in a primary braking mode applying a primary brake pressure;
Fig. 3 is the brake device shown in Fig. 1 in the primary braking mode with the primary brake pressure being released;
Fig. 4 is the brake device shown in Fig. 1 in a secondary braking mode to apply a secondary brake pressure according to an initial step to operate the brake caliper as floating caliper;
Fig. 5 is the brake device shown in Fig. 1 in the secondary braking mode to apply a secondary brake pressure according to a first step;
Fig. 6 is the brake device shown in Fig. 1 in the secondary braking mode to apply a secondary brake pressure according to a second step;
Fig. 7 is the brake device shown in Fig. 1 in the secondary braking mode to release a secondary brake pressure according to a first step;
Fig. 8 is the brake device shown in Fig. 1 in the secondary braking mode to release a secondary brake pressure according to a second step;
Fig. 9 is the brake device shown in Fig. in the secondary braking mode to release a secondary brake pressure according to a third step;
Fig. 10 is the brake device shown in Fig. 1 in the secondary braking mode to release a secondary brake pressure according to a fourth step;
Fig. 11 is the brake device shown in Fig. 1 in a brake caliper centering mode according to a first step;
Fig. 12 is the brake device shown in Fig. 1 in the brake caliper centering mode according to a second step;
Fig. 13 is the brake device shown in Fig. 1 in the brake caliper centering mode according to a third step;
Fig. 14 is the brake device shown in Fig. 1 in the brake caliper centering mode according to a fourth step;
Fig. 15 is an overview of different states of the brake device shown in Fig. 1 and corresponding settings;
Fig. 16 is a schematic cross-sectional view of a brake device according to a second embodiment of the invention and corresponding to a primary braking mode with the primary brake pressure being released as well as an idle or driving mode;
Fig. 17 is the brake device shown in Fig. 16 in the primary braking mode applying a primary brake pressure;
Fig. 18 is the brake device shown in Fig. 16 in the secondary braking mode with the secondary brake pressure being applied;
Fig. 19 is the brake device shown in Fig. 16 in secondary braking mode to release the secondary brake pressure; and
Fig. 20 is an overview of different states of the brake device shown in Fig. 16 and corresponding settings.

The following description of embodiments relates to brake devices for vehicles, wherein a primary braking mode corresponds to a service braking mode and the secondary braking mode corresponds to a parking braking mode as an exemplary configuration. However, the present invention is not limited to such assignment and the primary braking mode and the secondary braking mode may represent other braking modes, in which a respective operation of a braking caliper as fixed caliper or floating caliper may provide respective advantages. Further, as per the following, switching the brake caliper from a fixed caliper operating state to a floating caliper operating state may also be advantageous in other operating modes than braking modes.

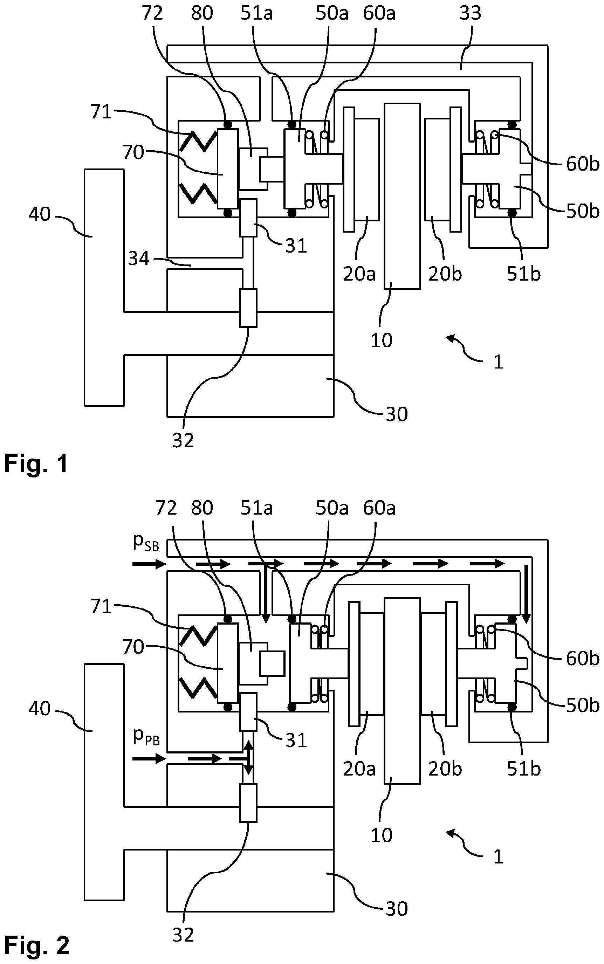

**Fig. 1** shows a schematic cross-sectional view of a brake device 1 according to a first embodiment of the invention.

The brake device 1 comprises a brake disc 10 rotatable about a rotational axis in accordance with a rotation of a respective wheel or axle assigned to the brake disc 10. To brake the brake disc 10 and therefore the respective wheel or axle, the brake device 1 comprises two brake pads 20a, 20b, each of which being arranged on opposed radial surface sides of the brake disc with respect to the rotational axis of the brake disc 10. The brake pad 20a is arranged on an inboard side of the brake disc 10 facing towards the center of a vehicle, when mounted thereto. In turn, the brake pad 20b is arranged on an outboard side of the brake disc 10 facing away from the center of a vehicle, when mounted thereto. For a concrete braking action, the two brake pads 20a, 20b are moved towards the respective radial surface of the brake disc 10.

For such actuation of the brake pads 20a, 20b, the brake device 1 further comprises a brake caliper 30, which is supported relatively movably on a carrier 40 in the braking direction. The braking direction corresponds to the direction to move the brake pads 20a, 20b towards the respective radial surfaces of the brake disc 10 and away therefrom, in the exemplary embodiment a direction in parallel to the rotational axis of the brake disc 10.

To actuate the brake pads 20a, 20b, the brake caliper 30 comprises an inboard slave piston 50a disposed on an inboard side of the inboard brake pad 20a facing away from the brake disc 10 and an outboard slave piston 50b on an outboard side of the outboard brake pad 20b facing away from the brake disc 10. The inboard slave piston 50a and the outboard slave piston 20b are movably supported in the brake caliper 30 to be relatively movable in the braking direction with respect to the carrier. The inboard slave piston 50a and the inboards brake pad 20a are connected to each other such that a movement of the inboard slave piston 50a in the braking direction provides the same movement by the inboard brake pad 20a. The same applies for the outboard slave piston 50b and the outboard brake pad 20b.

To move the slave pistons 50a, 50b and therefore the brake pads 20a, 20b towards the brake disc 10, the brake caliper 30 comprises service braking control line 33 as a primary brake control line, here a fluidic service braking control line such as a hydraulic or pneumatic service braking control line. The service braking control line 33 is configured as conduit to receive a fluid to be supplied to the slave pistons 50a, 50b on a side facing away from the respective brake pad 20a, 20b, i.e. on the inboard side of the inboard slave piston 50a and the outboard side of the outboard slave piston 50b, respectively. To substantially restrict the effect of the supplied pressure to the inboard slave piston 50a and the outboard side of the outboard slave piston 50b, respectively, the inboard slave piston 50a is sealed against the carrier 30 by a sealing member 51a and the outboard slave piston 50b is sealed against the carrier 30 by a sealing member 51b. The sealing members 51a, 51b are arranged between the respective slave piston 50a, 50b and the carrier in a radial direction with respect to the braking direction.

The service braking control line 33 supplies the fluid for the outboard slave piston 50b into a space between the outboard side of the outboard slave piston 50b and an inner brake caliper surface facing the outboard side of the outboard slave piston 50b. In this configuration, the outboard slave piston 50b comprises a projection extending in the braking direction from the outboard side of the outboard slave piston 50b towards the inner brake caliper surface facing the outboard side of the outboard slave piston 50b. Accordingly, a minimum distance between the outboard slave piston 50b and the inner brake caliper surface facing the outboard side of the outboard slave piston 50b is established to allow the fluid to move the outboard slave piston 50b towards the brake disc 10.

The service braking control line 33 supplies the fluid for the inboard slave piston 50a into a space between the inboard side of the inboard slave piston 50a and a parking brake member 70 as secondary brake member facing the inboard side of the inboard slave piston 50a.

Further, a spring member 60b extending in the braking direction is disposed between an inboard side of the outboard slave piston 50b and an inner brake caliper surface facing the inboard side of the outboard slave piston 50b. Accordingly, upon release of the fluidic pressure supplied by the service braking control line 33, the spring member 60b as compression spring moves the outboard slave piston 50b and therefore the respective brake pad 20b away from the brake disc 10. In other words, the movement of the outboard slave piston 50b in the braking direction depends on the ratio between spring force and the pressure or force by the fluid supplied. Similarly, a spring member 60a extending in the braking direction is disposed between an outboard side of the inboard slave piston 50a and an inner brake caliper surface facing the outboard side of the inboard slave piston 50a. The movement principles as described for the outboard slave piston 50b also apply for the inboard slave piston 50a. However, the movement of the inboard slave piston 50a may also be affected by the parking brake member 70.

The parking brake member 70 is arranged in the braking direction between the inboard slave piston 50a and an inner surface side on the brake caliper 30 facing the inboard side of the inboard slave piston 50a. The parking brake member 70 is sealed against the brake caliper 30 by a sealing member 72 disposed between the parking brake member 70 and the carrier in a radial direction with respect to the braking direction. Accordingly, in the braking direction, the sealing member 72 separates a space between the parking brake member 70 and the inboard slave piston 50a against a space between the parking brake member 70 and the inner side surface of the brake caliper 30 facing the inboard side of the parking brake member 70. A spring member 71 extending in the braking direction is disposed between the inner side surface of the brake caliper 30 facing the inboard side of the parking brake member 70 and the inboard side of the parking brake member 70. The spring member 71 as compression spring provides a spring force capable of moving the parking brake member 70 in the braking direction towards the brake disc 10 such as to apply a braking force on the brake disc 10 by the slave pistons 50a, 50b and the brake pads 20a, 20b, respectively. Consequently, the parking brake member 70 can provide a mechanical braking of the brake disc 10.

Further, the parking brake member 70 comprises a parking brake adjusting member 80 as secondary brake adjusting member extending in the braking direction towards the inboard slave piston 50a. The parking brake adjusting member 80 is a biasing member extendable in the braking direction to allow the parking brake member to come in contact with the inboard slave piston 50a and to extend to compensate, for example, for wear of the inboard brake pad 20a. In other words, during a braking action, if the moving distance of the inboard brake pad 20a to brake the brake disc 10 is enlarged due to wear, the parking brake adjusting member 80 still pushes the inboard slave piston 20a towards the inboard brake pad 20a without increasing the moving distance of the parking brake member 70. Additionally, the parking brake adjusting member 80 provides a minimum distance between the parking brake member 70 and the inboard slave piston 50a to maintain the space for the supply of fluid via the service braking control line.

Since the mechanical braking of the brake disc 10 by the parking brake member 70 is not intended to be applied in any operating mode of a vehicle, but may be restricted to a parking brake mode, the braking device 1 comprises a parking brake lock 31 as secondary brake lock. In the exemplary embodiment, the parking brake lock 31 is a bolt comprised by the caliper 30. The parking brake lock 31 is movable in a radial direction with respect to the braking direction from a parking brake member locking position in a parking brake member release position. In Fig. 1, the parking brake lock 31 is in the parking brake member locking position, in which the parking brake lock 31 projects from an inner side surface of the brake caliper 30 in the motion path of the parking brake member 70 to form an abutment for the parking brake member 70. Accordingly, the parking brake member 70 can be held in a retracted position, in which the parking brake member 70 does not apply a braking force on the inboard slave piston 50a. In the parking brake member release position, the parking brake lock 31 is moved in the radial direction inward the brake caliper 30 to cancel to projection effective as abutment for the parking brake member 70 to allow the parking brake member 70 to move towards the inboard slave piston 50a by the spring force of the spring member 71 to apply a braking force on the brake disc 10.

To move and/or hold the parking brake lock 31 in the parking brake member locking position and to move the parking brake lock 31 in the parking brake member release position, the brake caliper 30 comprises a lock control line 34. The lock control line 34 is a conduit configured to receive a fluid to be supplied the parking brake lock 31 to be actuated.

The lock control line 34 comprises a further branch to also supply the fluid to a brake caliper lock 32. The brake caliper lock 32 is configured to be moved and/or held in a brake caliper locking position upon a sufficient actuation by the fluid supplied and to be moved into a brake caliper release position upon a respective release of the fluid pressure, which has been provided by the fluid supplied. In the exemplary embodiment, the brake caliper lock 32 moves in a radial direction with respect to the braking direction but may also be moved in another direction in other embodiments. The brake caliper locking position is a position, in which the brake caliper lock 32, here a bolt, is moved to project from the brake caliper 30 to be received by a recess of the carrier 40. Accordingly, a form-fit connection of the brake caliper lock 32 and the carrier 40 is achieved in the brake caliper locking position of the brake caliper lock 32. However, in alternative embodiments, a force-fit connection may be alternatively or additionally provided in other embodiments. As a result of the brake caliper lock being moved or held in the brake caliper locking position, the brake caliper 30 is interlocked with the carrier 40 such that the brake caliper 30 can be operated as fixed caliper. In turn, when the brake caliper lock 32 is moved brake caliper release position to unlock the form-fit connection, the brake caliper 30 is relatively movable in the braking direction with respect to the carrier 40. Accordingly, the brake caliper 30 can be operated as floating caliper in such event.

Since the fluid is provided by the lock control line 34 to both the parking brake lock 31 and the brake caliper lock 32, the parking brake lock 31 is configured to be held in the parking brake member locking position at a lower fluid pressure than required for holding the brake caliper lock 32 in the brake caliper locking position. In other words, when the resulting pressure by the fluid supply via the lock control line 34 falls below a certain level, the brake caliper lock 32 is already moved in the brake caliper release position while the parking brake lock 31 still remains in the parking brake member locking position. In turn, the parking brake lock may already be moved from the parking brake member release position in the parking brake member locking position at a lower pressure than required for moving the brake caliper lock 32 from the brake caliper release position in the brake caliper locking position. This may be implemented by moving the respective locks 31, 32 against a spring force in the respective locking position, wherein the spring force applied on the parking brake lock 31 is lower than the spring force applied on the brake caliper lock 32. For example, the parking brake lock 31 is operated to be moved or held in the parking brake member locking position at pressure levels of 1 to 8 bar, while the brake caliper lock 32 is operated to be moved or held in the parking brake member locking position at pressure levels of 4 to 8 bar. Accordingly, for example, the parking brake lock 31 is in the parking brake member locking position and the brake caliper lock 32 is in the brake caliper release position at a pressure level of 2 bar or 3 bar. At a pressure level of 5 bar or 8 bar, both the parking brake lock 31 and the brake caliper lock 32 are in the respective locking position.

Next, the operation of the brake device 1 is described by reference to different operating modes with respect to Figs. 2 to 14.

**Fig. 2** shows the brake device 1 shown in Fig. 1 in a primary braking mode applying a primary brake pressure. The primary braking mode corresponds to a service braking mode and the primary brake pressure to a respective service brake pressure p_{SB}.

In the service braking mode to apply the service brake pressure p_{SB} to brake the brake disc 10 in accordance with the service brake pressure p_{SB}, a parking brake lock pressure p_{PB} is applied on the parking brake lock 31 and the brake caliper lock 32 sufficient to move and hold the parking brake lock 31 in the parking brake member locking position and the brake caliper lock 32 in the brake caliper locking position. Accordingly, the brake caliper 30 is operated as fixed caliper with the brake caliper lock 32 in the brake caliper locking position and the parking brake member 70 is in the retracted position with the parking brake lock 31 in the parking brake member locking position. Accordingly, when the service brake pressure p_{SB} is applied on the inboard side of the inboard slave piston 50a and the outboard side of the outboard slave piston 50b via the service braking control line 33, the slave pistons 50a, 50b are moved in the braking direction against the soring force of the respective spring members 60a, 60b towards to brake disc 10 thereby moving the respective brake pads 20a, 20b to apply a braking force of braking torque on the brake disc 10 on each radial surface side. This corresponds to a fixed caliper braking action.

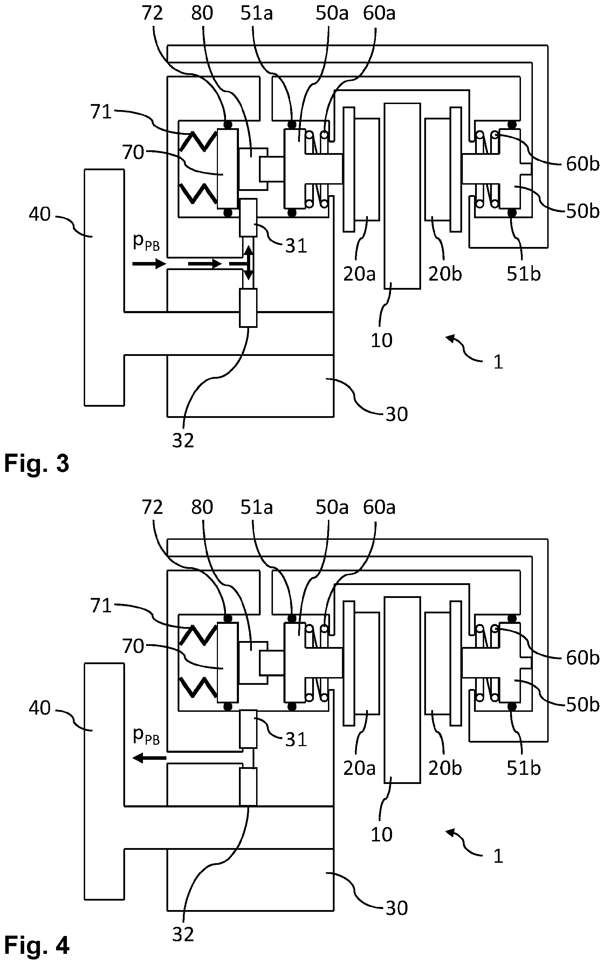

**Fig. 3** shows the brake device 1 shown in Fig. 1 in the primary braking mode with the primary brake pressure being released.

Accordingly, when the service braking pressure pSB is released up to a certain level at least with the respectively resulting force falling below the counterforce of the respective spring members 60a, 60b or is absent, the spring forces of the spring members 60a, 60b move the slave pistons 50a, 50b and therefore the brake pads 20a, 20b in the braking direction away from the brake disc 10. The parking brake lock 31 and the brake caliper lock 32 are still in their respective locking positions. This configuration with the brake pads 20a, 20b being distanced from the brake disc 10 may be also applicable for an idle or driving mode.

**Fig. 4** shows the brake device 1 shown in Fig. 1 in a secondary braking mode to apply a secondary brake pressure according to an initial step to operate the brake caliper as floating caliper.

In a parking braking mode as secondary brake mode to apply a parking brake pressure on the brake disc 10, the service brake pressure p_{SB} is released or absent as described with respect to Fig. 3. Further, to operate the brake caliper 30 as floating caliper and to allow the parking brake member to move towards the brake disc 10, the parking brake lock pressure p_{PB} is released. Since the pressure for moving the brake caliper lock 32 in the brake caliper release position is lower than the pressure for moving the parking brake lock 31 in the parking brake member release position, the interlock between the brake caliper 30 and the carrier 40 is released first.

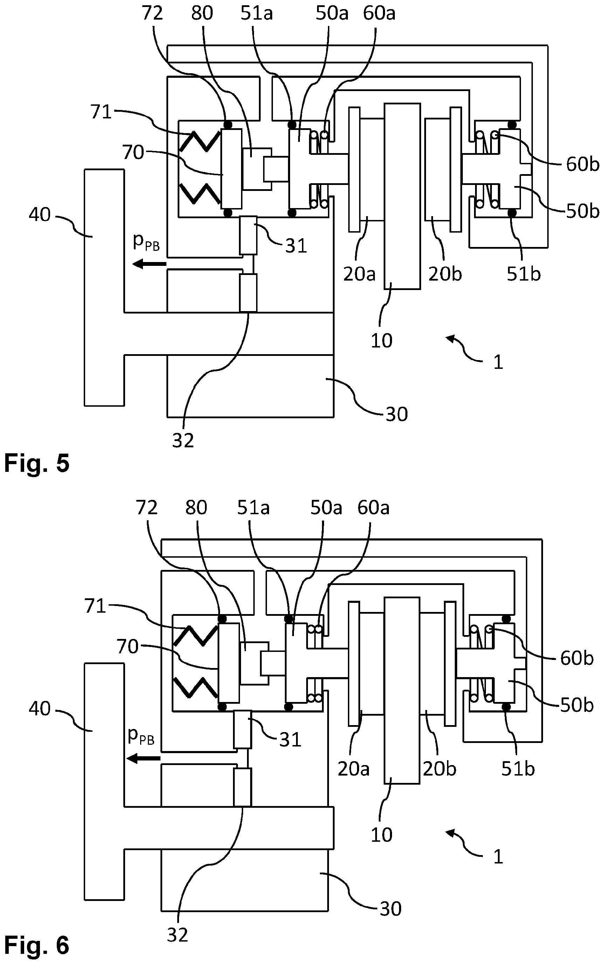

**Fig. 5** shows the brake device 1 shown in Fig. 1 in the secondary braking mode to apply a secondary brake pressure according to first step.

In accordance with the parking brake lock 31 being moved in the parking brake member release position, the spring member 71 moves the parking brake member 70 towards the inboards slave piston 50a. With the resulting force applied on the inboard slave piston 50a by the parking brake member 70 via the parking brake adjusting member is higher than the counterforce by the soring member 60a, the inboard slave piston 50a and thereby the inboard brake pad are moved towards the brake disc 10 such that the inboard brake pad 20a contacts the brake disc 10.

**Fig. 6** shows the brake device 1 shown in Fig. 1 in the secondary braking mode to apply a secondary brake pressure according to second step.

In accordance with the parking brake pressure applied by the spring force of the spring member 71 and the operation of the brake caliper 30 as floating caliper, the brake caliper 30 is urged to move in the braking direction towards the inboard side relatively to the carrier 40. Consequently, the outboard brake pad 20b is also brought into contact with the brake disc 10. The parking braking mode thus corresponds to a floating caliper braking mode.

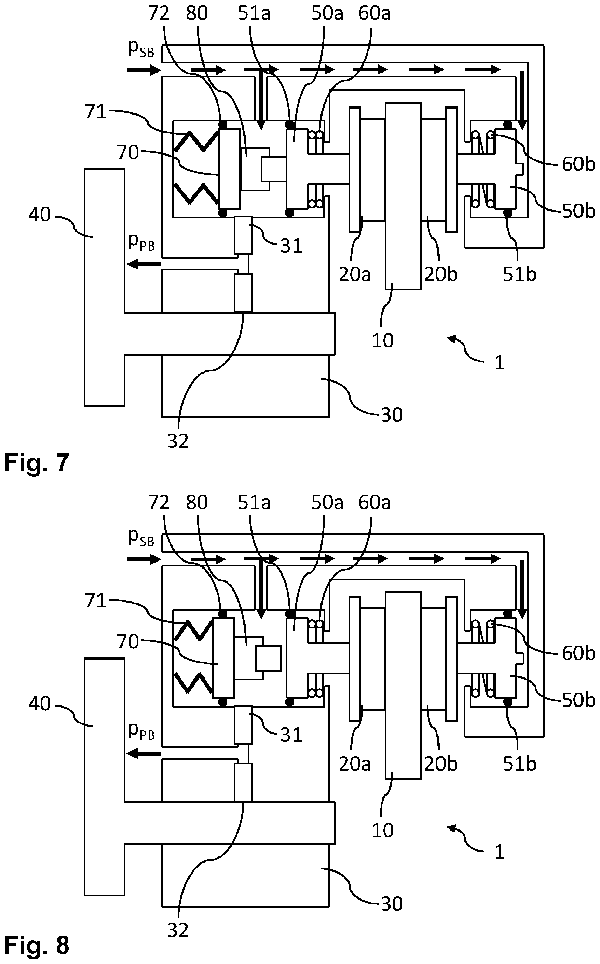

**Fig. 7** shows the brake device 1 shown in Fig. 1 in the secondary braking mode to release a secondary brake pressure according to a first step.

To release the parking brake pressure from the brake disc 10, the fluid to build up a respective service brake pressure p_{SB} is supplied to the space between the inboard side of the inboard slave piston 50a and the parking brake member 70 as well as the space between the outboard side of the outboard slave piston 50b and the inner side surface of the brake caliper 30 facing the outboard side of the outboard slave piston 50b.

**Fig. 8** shows the brake device 1 shown in Fig. 1 in the secondary braking mode to release a secondary brake pressure according to a second step.

Upon the respective pressure built up, the parking brake member 70 is moved against the spring force by the spring member 71 in the retracted position.

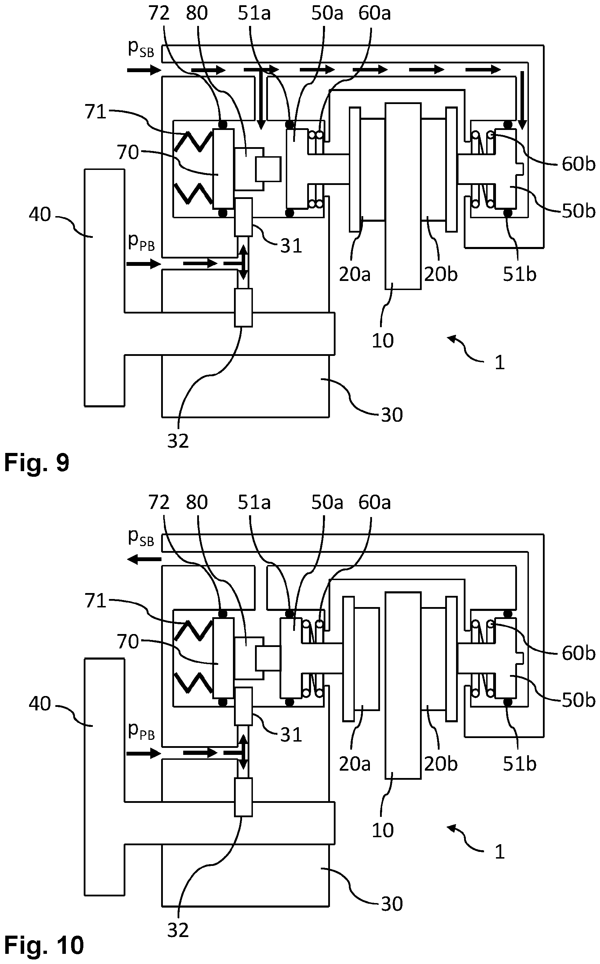

**Fig. 9** shows the brake device 1 shown in Fig. in the secondary braking mode to release a secondary brake pressure according to a third step.

With the parking brake member 70 being moved in the retracted position, the parking brake lock pressure p_{PB} is then supplied via the lock control line 34 to move the parking brake lock 31 in the parking brake member locking position and the brake caliper lock 32 in the brake caliper locking position.

**Fig. 10** shows the brake device 1 shown in Fig. 1 in the secondary braking mode to release a secondary brake pressure according to a fourth step.

After the parking brake lock 31 and the brake caliper lock 32 have been moved in the respective locking positions, the service brake pressure p_{SB} is released. Accordingly, the inboard slave piston 50a is moved in the braking direction away from the brake disc 10 due to the spring force of the spring member 60a to release the inboard brake pad 20a from the brake disc 10.

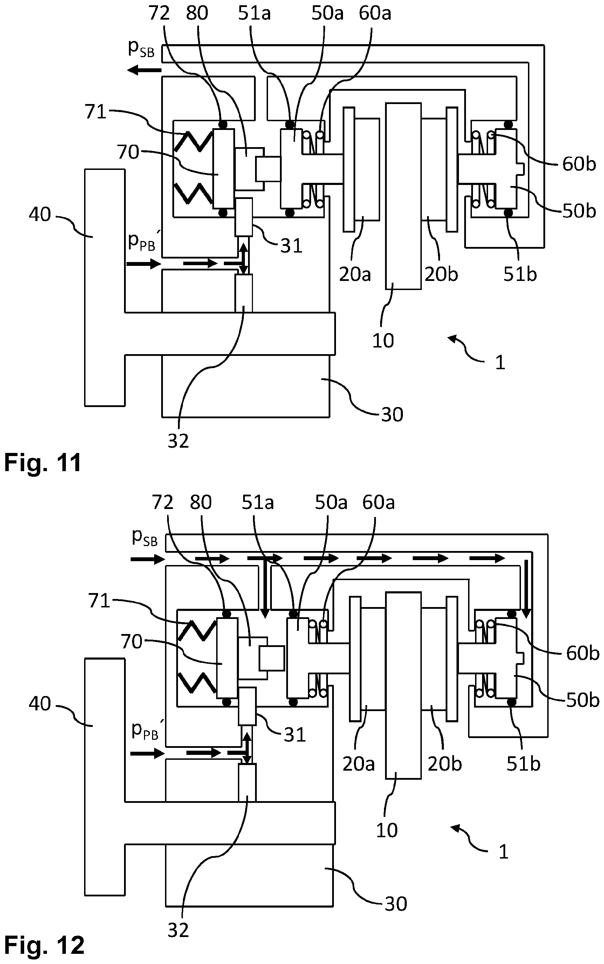

**Fig. 11** shows the brake device 1 shown in Fig. 1 in a brake caliper centering mode according to a first step.

In consequence of the above procedure for applying and releasing a parking brake pressure, the brake caliper 30 is off-centered with respect to the brake disc 10 and therefore the outboard brake pad 20b may still be in contact with the brake disc 10. Accordingly, a brake caliper centering may be executed to center the brake caliper 30 or the brake pads 20a, 20b, respectively, with respect to the brake disc 10 in the braking direction. However, the brake caliper centering may also be used under other circumstances requiring such centering.

Accordingly, in the respective brake caliper centering mode, first, the parking brake lock pressure p_{PB} is reduced to a parking brake lock pressure p_{PB}', which is sufficient to hold the parking brake lock 31 in the parking brake member locking position but moves the brake caliper lock 32 in the brake caliper release position.

**Fig. 12** shows the brake device 1 shown in Fig. 1 in the brake caliper centering mode according to a second step.

With the brake caliper 40 now being operated as floating caliper while still holding the parking brake member 70 in the retracted position, a respective service brake pressure p_{SB} is supplied to the space between the inboard side of the inboard slave piston 50a and the parking brake member 70 as well as the space between the outboard side of the outboard slave piston 50b and the inner side surface of the brake caliper 30 facing the outboard side of the outboard slave piston 50b. Accordingly, as per the functional principle of a floating caliper, the brake caliper 30 is centered with both brake pads 20a, 20b in contact with the brake disc.

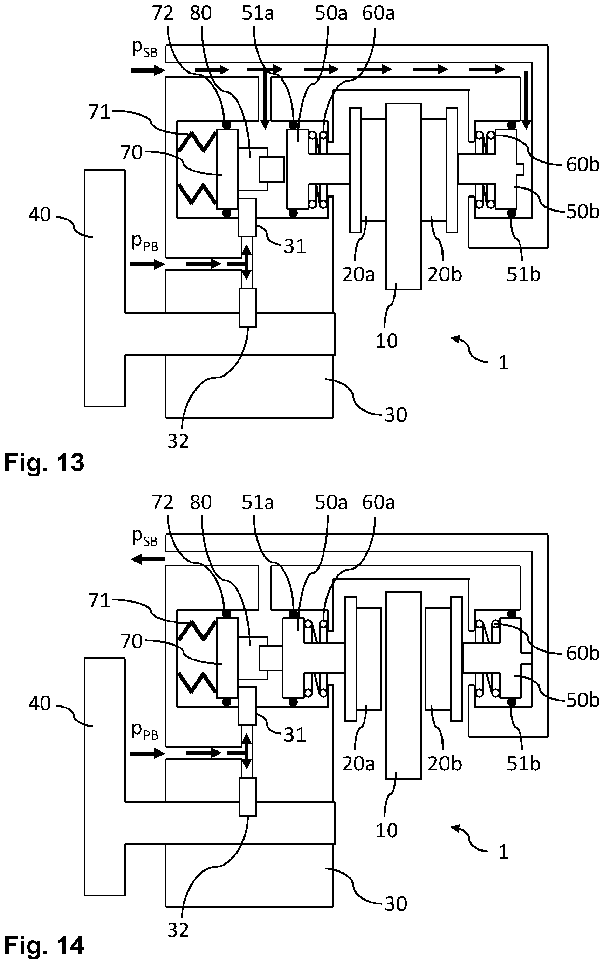

**Fig. 13** shows the brake device 1 shown in Fig. 1 in the brake caliper centering mode according to a third step.

In the above configuration as per Fig. 12, the parking brake lock pressure p_{PB}' is then increased up to the parking brake lock pressure p_{PB}, to still hold the parking brake lock 31 in the parking brake member locking position but also moves the brake caliper lock 32 in the brake caliper locking position. The brake caliper 30 accordingly returns to the fixed caliper state.

**Fig. 14** shows the brake device 1 shown in Fig. 1 in the brake caliper centering mode according to a fourth step.

To release the brake pads 20a, 20b from the brake disc 10 after the centering of the brake caliper 30 in the fixed caliper state, the service brake pressure is released.

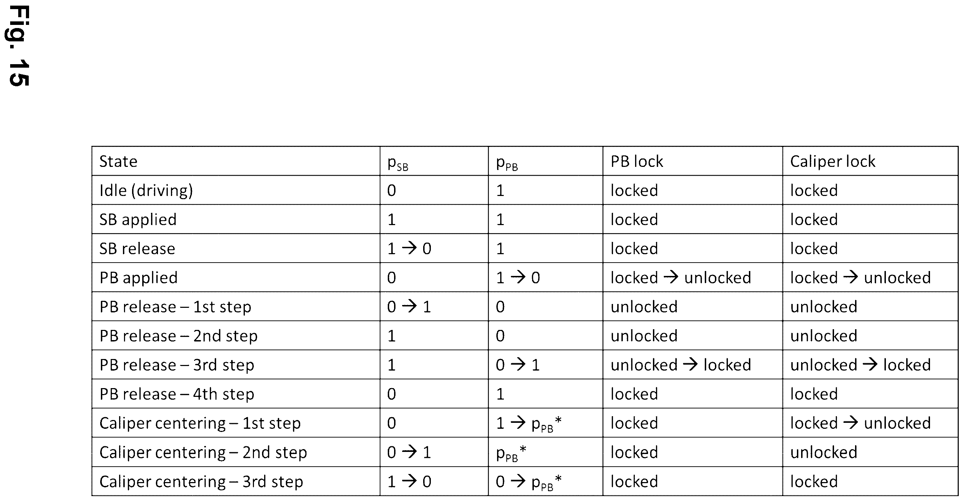

**Fig. 15** shows an overview of different states of the brake device 1 shown in Fig. 1 and corresponding settings.

The overview corresponds to a control logic for the brake device 1, for example, executed by a respective control unit or data processing unit to control the brake device 1. According to the table, during an idle or driving mode the service brake pressure p_{SB} is not applied, which represented by "0", but the parking brake lock pressure p_{RB} is applied, which is represented by "1". Thus, the parking brake lock 31 is in the parking brake member locking position and the brake caliper lock 32 is in the brake caliper locking position. For a braking action in the service braking mode, the service brake pressure p_{SB} is applied, which represented by "1", and the parking brake lock pressure p_{PB} is applied. In such configuration, the parking brake lock 31 is in the parking brake member locking position and the brake caliper lock 32 is in the brake caliper locking position. To release the service brake pressure p_{SB} from the brake disc 10, the service brake pressure p_{SB} is released and the parking brake lock pressure p_{PB} is still applied. Still, the parking brake lock 31 is in the parking brake member locking position and the brake caliper lock 32 is in the brake caliper locking position. Accordingly, in the idle or driving mode and the service braking mode, the brake caliper 30 is operated as fixed caliper.

In the parking braking mode to brake the brake disc 10 by a parking pressure, the service brake pressure p_{SB} is not applied and the parking brake lock pressure p_{PB} is released. Accordingly, the parking brake lock 31 is moved in the parking brake member release position and the brake caliper lock 32 is moved in the brake caliper release position. To release the parking brake pressure from the brake disc 10, in a first step, the service brake pressure p_{SB} is again applied while the parking brake lock pressure p_{PB} is still released. Both the parking brake lock 31 and the brake caliper lock 31 are held in the respective release position. In a second step, the service brake pressure p_{SB} is further applied while the parking brake lock pressure p_{PB} is still released. Still, both the parking brake lock 31 and the brake caliper lock 31 are held in the respective release position. Thereby, the spring member 71 is compressed by moving the parking brake member 70 in the retracted position. According to a third step for releasing the parking brake pressure, the service brake pressure p_{SB} is further applied while also applying the parking brake lock pressure p_{PB}. Thus, the parking brake lock 31 is moved in the parking brake member locking position and the brake caliper lock 32 is moved in the brake caliper locking position. In a fourth step for releasing the parking brake pressure, the service brake pressure p_{SB} is released while still applying the parking brake lock pressure p_{PB}. The parking brake lock 31 and the brake caliper lock 32 are still held in the respective locking position. After the fourth step, the outboard brake pad 20b may still be in contact with the brake disc 10.

To center the brake caliper 30 with respect to the brake disc 10, e.g. as the outboard brake pad 20b may still be in contact with the brake disc 10 as per the fourth step to release the parking brake pressure in the parking braking mode, a first step of a brake caliper centering mode is performed by reducing the parking brake lock pressure p_{PB} to the parking brake lock pressure p_{PB}' while the service brake pressure p_{SB} is not applied. Accordingly, the parking brake lock 31 is held in the parking brake member locking position but the brake caliper lock 32 is moved in the brake caliper release position. In a second step of the brake caliper centering mode, the service brake pressure p_{SB} is applied while the parking brake lock pressure p_{PB}' is maintained. Thus, the parking brake lock 31 is held in the parking brake member locking position and the brake caliper lock 32 is held in the brake caliper release position. The centering of the brake caliper position is thereby performed by the service brake pressure p_{SB} and the brake caliper 30 operated as floating caliper. Finally, in a third step of the brake caliper centering mode, the service brake pressure p_{SB} is released while the parking brake lock pressure p_{PB}' is increased to the parking brake lock pressure p_{PB}. Accordingly, the parking brake lock 31 and the brake caliper lock 32 are in the respective locking position.

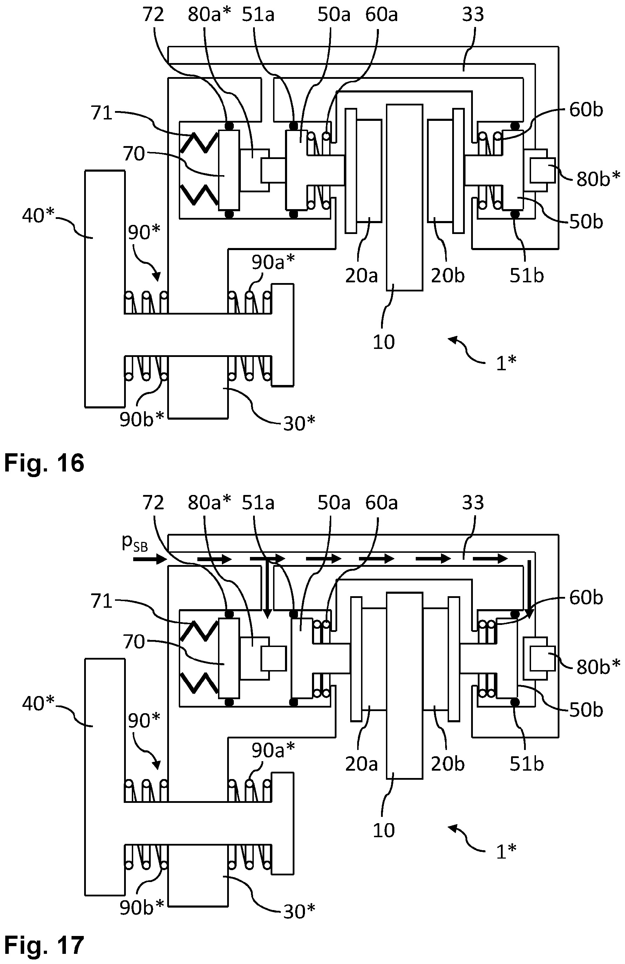

Next, a second embodiment of a brake device 1* according to the present invention is described with reference to Figs. 16 to 20. The brake device 1* according to the second embodiment differs from the brake device 1 according the first embodiment by a holding mechanism 90*, which replaces the brake caliper lock 32. Even though not shown in the Figs. 16 to 19, the parking brake lock 31 and the lock control line 34 are still comprised by a brake caliper 30* to provide the functionality of locking and releasing the parking brake member 70. However, due to the replacement of the brake caliper lock 32 by the holding mechanism 90*, the lock control line 34 only comprises the branch to supply fluid to the parking brake lock 31. Consequently, components already described with respect to the first embodiment and also applicable in the second embodiment are indicated by the same reference signs. Accordingly, for the characteristics and functionalities of such components, it is referred to the description of the first embodiment.

**Fig. 16** shows a schematic cross-sectional view of the brake device 1* according to the second embodiment of the invention and corresponding to a primary braking mode with the primary brake pressure being released as well as an idle or driving mode.

As indicated above, the brake device 1* according to the second embodiment mainly differs from the brake device 1 according to the first embodiment in the holding mechanism 90* to hold the brake caliper 30* in a predetermined position in the braking direction relatively to the carrier 40*, here a centered position with respect to the brake disc 10. The holding mechanism 90* comprises an inboard spring 90b* and an outboard spring 90a* as compression springs as biasing members. The inboard spring 90b* extends in the braking direction and is supported between the inboard side of the brake caliper 30* and a surface of the carrier 40* facing the inboard side of the brake caliper 30*. Similarly, The outboard spring 90a* extends in the braking direction and is supported between the outboard side of the brake caliper 30* and a surface of the carrier 40* facing the outboard side of the brake caliper 30*. As long as the spring force of the spring members 90a*, 90b* is not exceeded by a reaction force of the brake caliper 30* in the braking direction in response to an applied braking pressure, the brake caliper 30* operates as a fixed caliper. The representation as per Fig. 16 corresponds to the service braking mode as primary braking mode with the service brake pressure being released as well as an idle or driving mode. In such configuration, the parking brake member 70 is locked in the retracted position as previously described with reference to the first embodiment.

Further, the brake device 1* comprises an adjusting member 80b* disposed between the outboard side of the outboard slave piston 50b and the inner side surface of the brake caliper 30* facing the outboard side of the outboard slave piston 50b. The adjusting member 80b* is affixed to the inner side surface of the brake caliper 30* facing the outboard side of the outboard slave piston 50b and extendable in the braking direction to apply a biasing force on the outboard slave piston 50b to compensate for wear of the outboard brake pad 20b. Accordingly, the adjusting member 80b* is a further adjusting member in addition to the adjusting member 80a* of the parking brake member 70 corresponding to the adjusting member 80 of the parking brake member 70 in the first embodiment. Without the further adjusting member 80b* associated with the outboard salve piston 50b, the movement distance and therefore the required resulting counterforce for a bilateral braking in the event of wear of the outboard brake pad 20b assigned to the further adjusting member 80b* is increased. In other words, the further adjusting member 80b* allows the moving distance of the brake caliper 30* as floating caliper as described later and applicable force to be maintained relatively stable.

**Fig. 17** shows the brake device 1* shown in Fig. 16 in the primary braking mode applying a primary brake pressure.

For a braking action in the service braking mode as primary braking mode, a fluid to build up a respective service brake pressure p_{SB} is supplied to the space between the inboard side of the inboard slave piston 50a and the parking brake member 70 as well as the space between the outboard side of the outboard slave piston 50b and the inner side surface of the brake caliper 30* facing the outboard side of the outboard slave piston 50b. Due to the service brake pressure p_{SB} being applied on both slave pistons 50a, 50b, the resulting counter force, if at all, in the braking direction on the spring members 90a*, 90b* does not exceed the respective spring forces. A relative movement of the brake caliper 30* in the braking direction with respect to the carrier 40* is thereby prevented by the holding mechanism 90* and the brake caliper 30* is operated as fixed caliper.

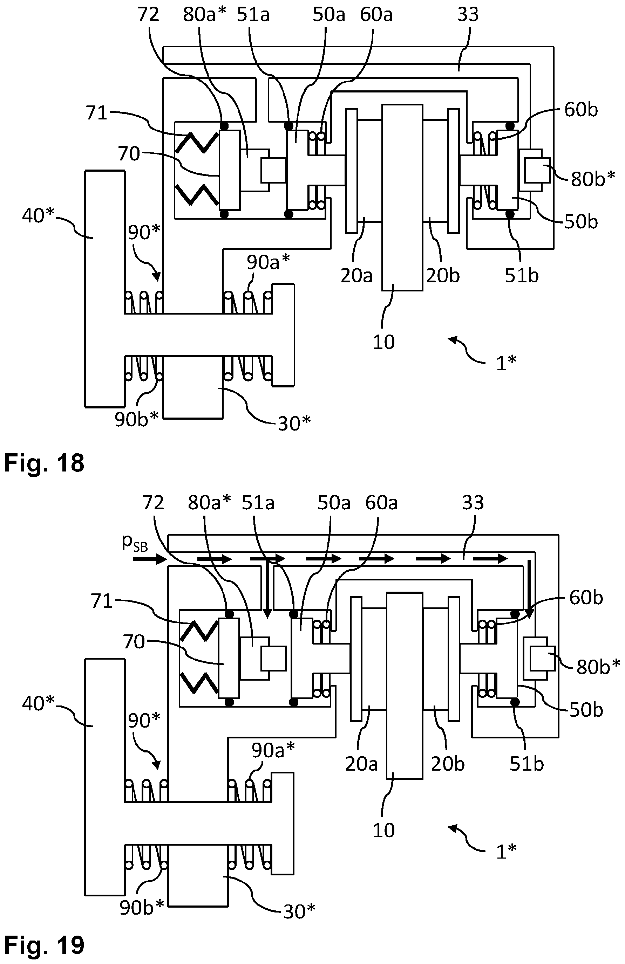

**Fig. 18** shows the brake device 1* shown in Fig. 16 in the secondary braking mode with the secondary brake pressure being applied.

In the parking braking mode as secondary braking mode with the service brake pressure p_{SB} being released, the parking brake lock 31 is moved in the parking brake member release position and the spring member 71 is able to extend to move the parking brake member 70 towards the brake disc 10 to apply a parking brake pressure thereon. In such event, upon contact of the inboard brake pad 20a with the brake disc 10, a counterforce by the brake caliper in the braking direction towards the inboard side occurs, which exceeds the spring force of the inboard spring member 90b*. Accordingly, the brake caliper 30* moves in the braking direction towards the inboard side and is therefore operated as floating caliper.

**Fig. 19** shows the brake device 1* shown in Fig. 16 in the secondary braking mode to release the secondary brake pressure.

In the parking braking mode, to release the parking brake pressure applied, the service brake pressure p_{SB} is supplied to the space between the inboard side of the inboard slave piston 50a and the parking brake member 70 as well as the space between the outboard side of the outboard slave piston 50b and the inner side surface of the brake caliper 30* facing the outboard side of the outboard slave piston 50b similar to the application of the service brake pressure p_{SB} in the service braking mode. However, as the brake pads 20a, 20b are already in contact with the brake disc 10, the service brake pressure p_{SB} in the space between the inboard side of the inboard slave piston 50a and the parking brake member 70 moves the parking brake member 70 in the retracted position. Subsequently, the parking brake member is locked in the retracted position by moving the parking brake lock 31 in the parking brake member locking position. Since no parking brake pressure is further applied, the service brake pressure p_{SB} and/or the spring members 90a*, 90b* center the brake caliper 30*.

According to the second embodiment and the above description, the brake device 1* comprising the holding mechanism 90* may not require an active brake caliper locking mechanism to be controlled but provides a self-controlling brake caliper 30* in terms of being operated as fixed caliper or floating caliper. Further, the holding mechanism 90* provides a self-centering of the brake caliper 30*.

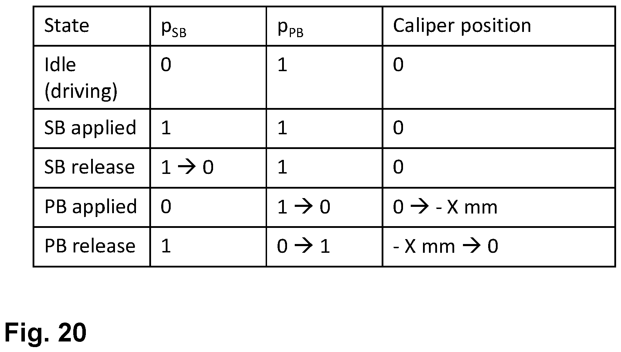

**Fig. 20** shows an overview of different states of the brake device 1* shown in Fig. 16 and corresponding settings.

As per the given table, in the idle or driving mode, the service brake pressure p_{SB} is released while the parking brake lock pressure p_{PB} is applied to hold the parking brake member 70 in the retracted position. In such configuration, the brake caliper 30* is centered with respect to the brake disc 10.

In the service braking mode, the service brake pressure p_{SB} is applied in parallel to the parking brake lock pressure p_{PB}. The brake caliper 30* is still centered with respect to the brake disc 10 and operates as fixed caliper. Upon release of the service brake pressure p_{SB} is released while the parking brake lock pressure p_{PB} is still applied, the brake caliper 30* remains centered.

In the parking braking mode, the parking brake pressure or parking brake force, respectively, is applied by releasing the parking brake lock pressure p_{PB} to move the parking brake lock 31 in the parking brake member release position while the service brake pressure p_{SB} is not applied. The brake caliper 30* is thereby operated as floating caliper as described above. Accordingly, the brake caliper 30* is off-centered. Upon release of the parking brake pressure by moving the parking brake member 70 in the retracted position via the application of the service brake pressure p_{SB} and locking the parking brake member 70 by applying the parking brake lock pressure p_{PB} to move the parking brake lock 31 in the parking brake member locking position, the off-centering is returned, i.e. the brake caliper 30* is centered, via the holding mechanism 90* and/or the application of the service brake pressure p_{SB} is not applied.

The invention is not limited to the embodiments described above, but only within the scope of the appended claims.

### LIST OF REFERENCE SIGNS

- 1, 1*: brake device
- 10: brake disc
- 20a: inboard brake pad
- 20b: outboard brake pad
- 30, 30*: brake caliper
- 31: parking brake lock (secondary brake lock)
- 32: brake caliper lock (holding mechanism)
- 33: service braking control line (primary brake control line)
- 34: lock control line
- 40, 40*: carrier
- 50a: inboard slave piston
- 50b: outboard slave piston
- 51a, 51b: sealing member (slave piston)
- 60a, 60b: spring member
- 70: parking brake member (secondary brake member)
- 71: spring member (secondary brake member)
- 72: sealing member (secondary brake member)
- 80, 80a*: parking brake adjusting member (secondary brake adjusting member)
- 80b*: adjusting member
- 90*: biasing mechanism (holding mechanism)
- 90a*, 90b*: spring member (biasing mechanism)
- p_{PB}, p_{PB}': parking brake lock pressure (lock pressure)
- p_{SB}: service brake pressure (primary brake pressure)

## Claims

1. Brake device (1, 1*) for a vehicle comprising:
at least one brake disc (10) comprising two opposed radial surfaces with respect to a rotational axis of the at least one brake disc (10),
at least two brake pads (20a, 20b) each of which facing one of the opposed radial surfaces of the at least one brake disc (10),
at least one brake caliper (30, 30*) configured to provide a relative movement of the at least two brake pads (20a, 20b) towards and away from each other in a braking direction to apply or release a braking torque on or from the at least one brake disc (10), wherein the at least one brake caliper is configured to provide the relative movement between the at least two brake pads (20a, 20b) in a primary braking mode and in a secondary braking mode, and
a carrier (40, 40*) to support the at least one brake caliper (30, 30*), wherein
the at least one brake caliper (30, 30*) is supported relatively moveable on the carrier (40, 40*) in the braking direction, the brake device (1, 1*) **characterized in that** it comprises a holding mechanism (32, 90*, 90a*, 90b*) configured to prevent the relative movement of the at least one brake caliper (30, 30*) with respect to the carrier (40, 40*) at least in the primary braking mode and to allow the relative movement of the at least one brake caliper (30, 30*) with respect to the carrier (40, 40*) at least in the secondary braking mode.

2. Brake device (1, 1*) according to claim 1, wherein
the at least one brake caliper (30, 30*) comprises at least one slave piston (50a, 50b) for each of the at least two brake pads (20a, 20b) to actuate the at least two brake pads (20a, 20b) in the braking direction, wherein the at least one slave piston (50a, 50b) is arranged on a side of the respective brake pad (20a, 20b) facing away from the brake disc (10), and wherein the brake caliper (30, 30*) is preferably configured to actuate the at least one slave piston (50a, 50b) via a primary brake control line (33), in particular a fluidic primary brake control line (33).

3. Brake device (1, 1*) according to claim 2, wherein the brake device (1, 1*) comprises at least one biasing member (60a, 60b), preferably at least one spring member (60a, 60b), associated with the at least one slave piston (50a, 50b) and configured to bias the at least one slave piston (50a, 50b) in the braking direction away from the brake disc (10).

4. Brake device (1, 1*) according to claim 2 or 3, wherein a secondary brake member (70) is arranged on one radial surface side of the brake disc (10), preferably an inboard side facing towards the vehicle center, on a side of the respectively arranged at least one slave piston (50a, 50b) facing away from the respectively arranged at least one brake pad (20a, 20b).

5. Brake device (1, 1*) according to claim 4, wherein the secondary brake member (70) and/or the at least one slave piston (50a, 50b) comprises a secondary brake adjusting member (80, 80a*) positioned between the secondary brake member (70) and the at least one slave piston (50a, 50b) and configured to be expandable in the braking direction.

6. Brake device (1, 1*) according to claim 4 or 5, wherein a biasing member, preferably a spring member (71) is arranged on a side of the secondary brake member (70) facing away from the at least one brake disc (10), and wherein the primary brake control line (33) is preferably configured to control the distance between the secondary brake member (70) and the at least one slave piston (50a, 50b).

7. Brake device (1, 1*) according any one of the preceding claims, wherein the brake device (1, 1*), preferably the at least one brake caliper (30, 30*), comprises a secondary brake lock (31) configured to be movable in a secondary brake member locking position to prevent a braking movement of the secondary brake member (70) in the braking direction towards the at least one brake disc (10) and in a secondary brake member release position to allow the braking movement.

8. Brake device (1) according to any one of the preceding claims, wherein the holding mechanism (32) comprises a brake caliper lock (32) configured to be movable in a brake caliper locking position to prevent the relative movement of the at least one brake caliper (30, 30*) with respect to the carrier (40, 40*) at least in the primary braking mode, and in a brake caliper release position to allow the relative movement of the at least one brake caliper (30, 30*) with respect to the carrier (40, 40*) at least in the secondary braking mode, preferably by being configured to be actuated via a lock control line (34), more preferably via a fluidic lock control line (34).

9. Brake device (1) according to claim 7 and claim 8, wherein the lock control line (34) is comprised by the brake caliper (30) and configured to actuate both the secondary brake lock (31) and the brake caliper lock (32), preferably by a fluidic lock pressure (p_{PB}, p_{PB}'), wherein the secondary brake lock (31) is preferably configured to be moved and/or held in the secondary brake member locking position at a lower fluidic pressure (p_{PB}') than the fluidic pressure (p_{PB}) to move and/or hold the brake caliper lock (32) in the brake caliper locking position.

10. Brake device (1*) according to any one of the claims 1 to 7, wherein the holding mechanism (90*, 90a*, 90b*) comprises a biasing mechanism (90*, 90a*, 90b*), preferably at least two spring members (90a*, 90b*) each of which being arranged on opposed sides of the brake caliper (30*), configured to bias the brake caliper (30*) in a predetermined position on the carrier (40*) in the braking direction.

11. Brake device (1*) according to one of the claims 2 to 7 and claim 10, wherein the brake caliper (30*) comprises an adjusting member (80a*, 80b*) for each of the slave pistons (50a, 50b), preferably the secondary brake adjusting member (80a*) according to claim 5 and a further adjusting member for the respectively opposed slave piston (50a, 50b).

12. Method for operating a brake device (1, 1*) according to any one of the claims 1 to 11, wherein the method being **characterized by** the following steps:
holding the at least one brake caliper (30, 30*) by the holding mechansim (32, 90*, 90a*, 90b*) in a predetermined position in the braking direction with respect to the carrier (40, 40*) at least in the primary braking mode, and
allowing the relative movement of the at least one brake caliper (30, 30*) with respect to the carrier (40, 40*) at least in the secondary braking mode.

13. Method according to claim 12, wherein
the primary braking mode is a service braking mode and the secondary braking mode is a parking braking mode.

14. Method according to claim 12 or 13, wherein
the at least one brake caliper (30, 30*) is also held by the holding mechansim (32, 90*, 90a*, 90b*) in the predetermined position in an idle or driving mode, and/or
the relative movement of the at least one brake caliper (30, 30*) with respect to the carrier (40, 40*) is also allowed in a brake caliper centering mode to center the brake caliper (30, 30*) with respect to the brake disc (10).

15. Method according to claim 14 for operating a brake device (1, 1*) according to any one of the claims 7 to 11, wherein,
in the idle or driving mode, the secondary brake lock (31) is in the secondary brake member locking position and the at least one brake caliper (30, 30*) is held by the holding mechansim (32, 90*, 90a*, 90b*), and/or
in the brake caliper centering mode,
the primary brake pressure (p_{SB}) is released with the secondary brake lock (31) being in the secondary brake member locking position and the relative movement of the at least one brake caliper (30, 30*) with respect to the carrier (40, 40*) being allowed,
subsequently applying the primary brake pressure (p_{SB}), and
afterwards releasing the primary brake pressure (p_{SB}) with the secondary brake lock (31) being in the secondary brake member locking position and the at least one brake caliper (30, 30*) being held by the holding mechansim (32, 90*, 90a*, 90b*).

16. Method according to any one of the claims 12 to 15 for operating a brake device (1, 1*) according to any one of the claims 7 to 11, wherein,
in the primary brake mode, a primary brake pressure (p_{SB}) is applied and released with the secondary brake lock (31) being in the secondary brake member locking position and the at least one brake caliper (30, 30*) being held by the holding mechansim (32, 90*, 90a*, 90b*), and/or
in the secondary brake mode,
a secondary brake pressure is applied with the primary brake pressure (p_{SB}) being released, the secondary brake lock (31) being in the secondary brake member release position and the relative movement of the at least one brake caliper (30, 30*) with respect to the carrier (40, 40*) being allowed, and
said secondary brake pressure is preferably released by
applying the primary brake pressure (p_{SB}) the secondary brake lock (31) being in the secondary brake member release position and the relative movement of the at least one brake caliper (30, 30*) with respect to the carrier (40, 40*) being allowed,
subsequently moving secondary brake lock (31) in the secondary brake member locking position and holding the at least one brake caliper (30, 30*) by the holding mechansim (32, 90*, 90a*, 90b*), and
afterwards releasing the primary brake pressure (p_{SB}) with the secondary brake lock (31) being in the secondary brake member locking position and the at least one brake caliper (30, 30*) being held by the holding mechansim (32, 90*, 90a*, 90b*).

17. Vehicle for performing the method according to any one of the claims 12 to 16, wherein
the vehicle comprises a device according to any one of the claims 1 to 11.

18. Computer program product having code means, which, when being executed on a data processing unit, cause it to execute the method according to any one of the claims 12 to 16.

19. Storage medium for being read by a data processing unit, wherein the storage medium comprises a computer program product according to claim 18.

## Patentansprüche

1. Bremsvorrichtung (1, 1*) für ein Fahrzeug, umfassend:
mindestens eine Bremsscheibe (10), die zwei in Bezug auf eine Drehachse der mindestens einen Bremsscheibe (10) gegenüberliegende radiale Oberflächen umfasst,
mindestens zwei Bremsbeläge (20a, 20b), von denen jeder einer der gegenüberliegenden radialen Oberflächen der mindestens einen Bremsscheibe (10) zugewandt ist,
mindestens einen Bremssattel (30, 30*), der so konfiguriert ist, dass er eine Relativbewegung der mindestens zwei Bremsbeläge (20a, 20b) aufeinander zu und voneinander weg in einer Bremsrichtung bereitstellt, um ein Bremsmoment an die mindestens eine Bremsscheibe (10) anzulegen oder von dieser zu lösen, wobei der mindestens eine Bremssattel so konfiguriert ist, dass er die Relativbewegung zwischen den mindestens zwei Bremsbelägen (20a, 20b) in einem Primärbremsmodus und in einem Sekundärbremsmodus bereitstellt, und
einen Träger (40, 40*), um den mindestens einen Bremssattel (30, 30*) zu lagern, wobei
der mindestens eine Bremssattel (30, 30*) auf dem Träger (40, 40*) in der Bremsrichtung relativ beweglich gelagert ist, wobei die Bremsvorrichtung (1, 1*) **dadurch gekennzeichnet ist, dass** sie umfasst
einen Haltemechanismus (32, 90*, 90a*, 90b*), der so konfiguriert ist, dass er die Relativbewegung des mindestens einen Bremssattels (30, 30*) in Bezug auf den Träger (40, 40*) mindestens im Primärbremsmodus verhindert, und die Relativbewegung des mindestens einen Bremssattels (30, 30*) in Bezug auf den Träger (40, 40*) mindestens im Sekundärbremsmodus zulässt.

2. Bremsvorrichtung (1, 1*) nach Anspruch 1, wobei
der mindestens eine Bremssattel (30, 30*) mindestens einen Nehmerkolben (50a, 50b) für jeden der mindestens zwei Bremsbeläge (20a, 20b) umfasst, um die mindestens zwei Bremsbeläge (20a, 20b) in der Bremsrichtung zu betätigen, wobei der mindestens eine Nehmerkolben (50a, 50b) auf einer Seite des jeweiligen Bremsbelags (20a, 20b) angeordnet ist, die von der Bremsscheibe (10) abgewandt ist, und wobei der Bremssattel (30, 30*) vorzugsweise so konfiguriert ist, dass er den mindestens einen Nehmerkolben (50a, 50b) über eine Primärbremssteuerleitung (33), insbesondere eine fluidische Primärbremssteuerleitung (33), betätigt.

3. Bremsvorrichtung (1, 1*) nach Anspruch 2, wobei die Bremsvorrichtung (1, 1*) mindestens ein Vorspannelement (60a, 60b) umfasst, vorzugsweise mindestens ein Federelement (60a, 60b), das mit dem mindestens einen Nehmerkolben (50a, 50b) verknüpft und so konfiguriert ist, dass es den mindestens einen Nehmerkolben (50a, 50b) in der Bremsrichtung von der Bremsscheibe (10) weg vorspannt.

4. Bremsvorrichtung (1, 1*) nach Anspruch 2 oder 3, wobei ein Sekundärbremselement (70) auf einer radialen Oberflächenseite der Bremsscheibe (10), vorzugsweise einer der Fahrzeugmitte zugewandten Innenseite, auf einer Seite des jeweils angeordneten mindestens einen Nehmerkolbens (50a, 50b), die von dem jeweils angeordneten mindestens einen Bremsbelag (20a, 20b) abgewandt ist, angeordnet ist.

5. Bremsvorrichtung (1, 1*) nach Anspruch 4, wobei das Sekundärbremselement (70) und/oder der mindestens eine Nehmerkolben (50a, 50b) ein Sekundärbremsnachstellelement (80, 80a*) umfasst, das zwischen dem Sekundärbremselement (70) und dem mindestens einen Nehmerkolben (50a, 50b) positioniert und so konfiguriert ist, dass es in der Bremsrichtung dehnbar ist.

6. Bremsvorrichtung (1, 1*) nach Anspruch 4 oder 5, wobei ein Vorspannelement, vorzugsweise ein Federelement (71), auf einer Seite des Sekundärbremselements (70), die von der mindestens einen Bremsscheibe (10) abgewandt ist, angeordnet ist, und wobei die Primärbremssteuerleitung (33) vorzugsweise so konfiguriert ist, dass sie den Abstand zwischen dem Sekundärbremselement (70) und dem mindestens einen Nehmerkolben (50a, 50b) steuert.

7. Bremsvorrichtung (1, 1*) nach einem der vorstehenden Ansprüche, wobei die Bremsvorrichtung (1, 1*), vorzugsweise der mindestens eine Bremssattel (30, 30*), eine Sekundärbremsverriegelung (31) umfasst, die so konfiguriert ist, dass sie in eine Sekundärbremselement-Verriegelungsposition bewegt werden kann, um eine Bremsbewegung des Sekundärbremselements (70) in der Bremsrichtung auf die mindestens eine Bremsscheibe (10) zu zu verhindern, und in eine Sekundärbremselement-Löseposition, um die Bremsbewegung zuzulassen.

8. Bremsvorrichtung (1) nach einem der vorstehenden Ansprüche, wobei der Haltemechanismus (32) eine Bremssattelverriegelung (32) umfasst, die so konfiguriert ist, dass sie in eine Bremssattel-Verriegelungsposition bewegt werden kann, um die Relativbewegung des mindestens einen Bremssattels (30, 30*) in Bezug auf den Träger (40, 40*) mindestens im Primärbremsmodus zu verhindern, und in eine Bremssattel-Löseposition, um die Relativbewegung des mindestens einen Bremssattels (30, 30*) in Bezug auf den Träger (40, 40*) mindestens im Sekundärbremsmodus zuzulassen, vorzugsweise indem sie so konfiguriert ist, dass sie über eine Verriegelungssteuerleitung (34), bevorzugter über eine fluidische Verriegelungssteuerleitung (34), betätigt wird.

9. Bremsvorrichtung (1) nach Anspruch 7 und Anspruch 8, wobei die Verriegelungssteuerleitung (34) im Bremssattel (30) umfasst und so konfiguriert ist, dass sie sowohl die Sekundärbremsverriegelung (31) als auch die Bremssattelverriegelung (32) betätigt, vorzugsweise über einen fluidischen Verriegelungsdruck (p_{PB}, p_{PB}'), wobei die Sekundärbremsverriegelung (31) vorzugsweise so konfiguriert ist, dass sie bei einem niedrigeren fluidischen Druck (p_{PB}') als dem fluidischen Druck (p_{PB}), um die Bremssattelverriegelung (32) in die Bremssattel-Verriegelungsposition zu bewegen und/oder in dieser zu halten, in die Sekundärbremselement-Verriegelungsposition bewegt und/oder in dieser gehalten wird.

10. Bremsvorrichtung (1*) nach einem der Ansprüche 1 bis 7, wobei der Haltemechanismus (90*, 90a*, 90b*) einen Vorspannmechanismus (90*, 90a*, 90b*) umfasst, vorzugsweise mindestens zwei Federelemente (90a*, 90b*), die jeweils auf gegenüberliegenden Seiten des Bremssattels (30*) angeordnet und so konfiguriert sind, dass sie den Bremssattel (30*) in eine vorbestimmte Position auf dem Träger (40*) in der Bremsrichtung vorspannen.

11. Bremsvorrichtung (1*) nach einem der Ansprüche 2 bis 7 und Anspruch 10, wobei der Bremssattel (30*) ein Nachstellelement (80a*, 80b*) für jeden der Nehmerkolben (50a, 50b), vorzugsweise das Sekundärbremsnachstellelement (80a*) nach Anspruch 5 und ein weiteres Nachstellelement für den jeweils gegenüberliegenden Nehmerkolben (50a, 50b), umfasst.

12. Verfahren zum Betreiben einer Bremsvorrichtung (1, 1*) nach einem der Ansprüche 1 bis 11, wobei das Verfahren durch die folgenden Schritte gekennzeichnet ist:
Halten des mindestens einen Bremssattels (30, 30*) durch den Haltemechanismus (32, 90*, 90a*, 90b*) in einer vorbestimmten Position in der Bremsrichtung in Bezug auf den Träger (40, 40*) mindestens im Primärbremsmodus, und
Zulassen der Relativbewegung des mindestens einen Bremssattels (30, 30*) in Bezug auf den Träger (40, 40*) mindestens im Sekundärbremsmodus.

13. Verfahren nach Anspruch 12, wobei
der Primärbremsmodus ein Betriebsbremsmodus ist und der Sekundärbremsmodus ein Parkbremsmodus ist.

14. Verfahren nach Anspruch 12 oder 13, wobei
der mindestens eine Bremssattel (30, 30*) ebenfalls durch den Haltemechanismus (32, 90*, 90a*, 90b*) in der vorbestimmten Position in einem Leerlauf- oder Fahrmodus gehalten wird, und/oder
die Relativbewegung des mindestens einen Bremssattels (30, 30*) in Bezug auf den Träger (40, 40*) ebenfalls in einem Bremssattelzentriermodus zugelassen wird, um den Bremssattel (30, 30*) in Bezug auf die Bremsscheibe (10) zu zentrieren.

15. Verfahren nach Anspruch 14 zum Betreiben einer Bremsvorrichtung (1, 1*) nach einem der Ansprüche 7 bis 11, wobei
im Leerlauf- oder Fahrmodus die Sekundärbremsverriegelung (31) sich in der Sekundärbremselement-Verriegelungsposition befindet, und der mindestens eine Bremssattel (30, 30*) durch den Haltemechanismus (32, 90*, 90a*, 90b*) gehalten wird, und/oder
im Bremssattelzentriermodus
der Primärbremsdruck (p_{SB}) gelöst wird, wobei sich die Sekundärbremsverriegelung (31) in der Sekundärbremselement-Verriegelungsposition befindet und die Relativbewegung des mindestens einen Bremssattels (30, 30*) in Bezug auf den Träger (40, 40*) zugelassen wird,
anschließend Anlegen des Primärbremsdrucks (p_{SB}), und
danach Lösen des Primärbremsdrucks (p_{SB}), wobei sich die Sekundärbremsverriegelung (31) in der Sekundärbremselement-Verriegelungsposition befindet und der mindestens eine Bremssattel (30, 30*) durch den Haltemechanismus (32, 90*, 90a*, 90b*) gehalten wird.

16. Verfahren nach einem der Ansprüche 12 bis 15 zum Betreiben einer Bremsvorrichtung (1, 1*) nach einem der Ansprüche 7 bis 11, wobei
im Primärbremsmodus ein Primärbremsdruck (p_{SB}) angelegt und gelöst wird, wobei sich die Sekundärbremsverriegelung (31) in der Sekundärbremselement-Verriegelungsposition befindet und der mindestens eine Bremssattel (30, 30*) durch den Haltemechanismus (32, 90*, 90a*, 90b*) gehalten wird, und/oder
im Sekundärbremsmodus
ein Sekundärbremsdruck angelegt wird, wobei der Primärbremsdruck (p_{SB}) gelöst wird, wobei sich die Sekundärbremsverriegelung (31) in der Sekundärbremselement-Löseposition befindet und die Relativbewegung des mindestens einen Bremssattels (30, 30*) in Bezug auf den Träger (40, 40*) zugelassen wird, und
der Sekundärbremsdruck vorzugsweise gelöst wird durch
Anlegen des Primärbremsdrucks (p_{SB}), wobei sich die Sekundärbremsverriegelung (31) in der Sekundärbremselement-Löseposition befindet und die Relativbewegung des mindestens einen Bremssattels (30, 30*) in Bezug auf den Träger (40, 40*) zugelassen wird,
anschließend Bewegen der Sekundärbremsverriegelung (31) in die Sekundärbremselement-Verriegelungsposition und Halten des mindestens einen Bremssattels (30, 30*) durch den Haltemechanismus (32, 90*, 90a*, 90b*), und
danach Lösen des Primärbremsdrucks (p_{SB}), wobei sich die Sekundärbremsverriegelung (31) in der Sekundärbremselement-Verriegelungsposition befindet und der mindestens eine Bremssattel (30, 30*) durch den Haltemechanismus (32, 90*, 90a*, 90b*) gehalten wird.

17. Fahrzeug zum Durchführen des Verfahrens nach einem der Ansprüche 12 bis 16, wobei
das Fahrzeug eine Vorrichtung nach einem der Ansprüche 1 bis 11 umfasst.

18. Computerprogrammprodukt, das Codemittel aufweist, die, wenn sie auf einer Datenverarbeitungseinheit ausgeführt werden, diese dazu bringen, das Verfahren nach einem der Ansprüche 12 bis 16 auszuführen.

19. Speichermedium zum Lesen durch eine Datenverarbeitungseinheit, wobei das Speichermedium ein Computerprogrammprodukt nach Anspruch 18 umfasst.

## Revendications

1. Dispositif de frein (1, 1 *) pour un véhicule comprenant :
au moins un disque de frein (10) comprenant deux surfaces radiales opposées par rapport à un axe de rotation du au moins un disque de frein (10),
au moins deux plaquettes de frein (20a, 20b) dont chacune fait face à l'une des surfaces radiales opposées du au moins un disque de frein (10),
au moins un étrier de frein (30, 30*) configuré pour fournir un mouvement relatif des au moins deux plaquettes de frein (20a, 20b) en direction et à l'opposé l'une de l'autre dans une direction de freinage pour appliquer ou libérer un couple de freinage sur ou à partir du au moins un disque de frein (10), dans lequel le au moins un étrier de frein est configuré pour fournir le mouvement relatif entre les au moins deux plaquettes de frein (20a, 20b) dans un mode de freinage primaire et dans un mode de freinage secondaire, et
un support (40, 40*) pour supporter le au moins un étrier de frein (30, 30*), dans lequel
le au moins un étrier de frein (30, 30*) est supporté de manière relativement mobile sur le support (40, 40*) dans la direction de freinage, le dispositif de frein (1, 1*) étant **caractérisé en ce qu'**il comprend
un mécanisme de maintien (32, 90*, 90a*, 90b*) configuré pour empêcher le mouvement relatif du au moins un étrier de frein (30, 30*) par rapport au support (40, 40*) au moins dans le mode de freinage primaire et pour permettre le mouvement relatif du au moins un étrier de frein (30, 30*) par rapport au support (40, 40*) au moins dans le mode de freinage secondaire.

2. Dispositif de frein (1, 1*) selon la revendication 1, dans lequel
le au moins un étrier de frein (30, 30*) comprend au moins un piston esclave (50a, 50b) pour chacune des au moins deux plaquettes de frein (20a, 20b) pour actionner les au moins deux plaquettes de frein (20a, 20b) dans la direction de freinage, dans lequel le au moins un piston esclave (50a, 50b) est agencé sur un côté de la plaquette de frein (20a, 20b) respective à l'opposé du disque de frein (10), et dans lequel l'étrier de frein (30, 30*) est de préférence configuré pour actionner le au moins un piston esclave (50a, 50b) par l'intermédiaire d'une ligne de commande de frein primaire (33), en particulier une ligne de commande de frein primaire fluidique (33).

3. Dispositif de frein (1, 1*) selon la revendication 2, dans lequel le dispositif de frein (1, 1*) comprend au moins un élément de sollicitation (60a, 60b), de préférence au moins un élément ressort (60a, 60b), associé au au moins un piston esclave (50a, 50b) et configuré pour solliciter le au moins un piston esclave (50a, 50b) dans la direction de freinage à l'opposé du disque de frein (10).

4. Dispositif de frein (1, 1*) selon la revendication 2 ou 3, dans lequel un élément de frein secondaire (70) est agencé sur un côté de surface radiale du disque de frein (10), de préférence un côté intérieur orienté vers le centre de véhicule, sur un côté du au moins un piston esclave (50a, 50b) respectivement agencé, à l'opposé de la au moins une plaquette de frein (20a, 20b) respectivement agencée.

5. Dispositif de frein (1, 1*) selon la revendication 4, dans lequel l'élément de frein secondaire (70) et/ou le au moins un piston esclave (50a, 50b) comprend/comprennent un élément de réglage de frein secondaire (80, 80a*) positionné entre l'élément de frein secondaire (70) et le au moins un piston esclave (50a, 50b) et configuré pour être extensible dans la direction de freinage.

6. Dispositif de frein (1, 1 *) selon la revendication 4 ou 5, dans lequel un élément de sollicitation, de préférence un élément de ressort (71) est agencé sur un côté de l'élément de frein secondaire (70) orienté à l'opposé du au moins un disque de frein (10), et dans lequel la ligne de commande de frein primaire (33) est de préférence configurée pour commander la distance entre l'élément de frein secondaire (70) et le au moins un piston esclave (50a, 50b).

7. Dispositif de frein (1, 1*) selon l'une quelconque des revendications précédentes, dans lequel le dispositif de frein (1, 1*), de préférence le au moins un étrier de frein (30, 30*), comprend un verrou de frein secondaire (31) configuré pour être mobile dans une position de verrouillage d'élément de frein secondaire pour empêcher un mouvement de freinage de l'élément de frein secondaire (70) dans la direction de freinage vers le au moins un disque de frein (10) et dans une position de libération d'élément de frein secondaire pour permettre le mouvement de freinage.

8. Dispositif de frein (1) selon l'une quelconque des revendications précédentes, dans lequel le mécanisme de maintien (32) comprend un verrou d'étrier de frein (32) configuré pour être mobile dans une position de verrou d'étrier de frein pour empêcher le mouvement relatif du au moins un étrier de frein (30, 30*) par rapport au support (40, 40*) au moins dans le mode de freinage primaire, et dans une position de libération d'étrier de frein pour permettre le mouvement relatif du au moins un étrier de frein (30, 30*) par rapport au support (40, 40*) au moins dans le mode de freinage secondaire, de préférence en étant configuré pour être actionné via une ligne de commande de verrou (34), plus préférentiellement via une ligne de commande de verrou fluidique (34).

9. Dispositif de frein (1) selon la revendication 7 et la revendication 8, dans lequel la ligne de commande de verrou (34) est constituée par l'étrier de frein (30) et configurée pour actionner à la fois le verrou de frein secondaire (31) et le verrou d'étrier de frein (32), de préférence par une pression de verrou fluidique (p_{PB}, p_{PB}'), dans lequel le verrou de frein secondaire (31) est de préférence configuré pour être déplacé et/ou maintenu dans la position de verrouillage d'élément de frein secondaire à une pression fluidique inférieure (p_{PB}') à la pression fluidique (p_{PB}) pour déplacer et/ou maintenir le verrou d'étrier de frein (32) dans la position de verrouillage d'étrier de frein.

10. Dispositif de frein (1*) selon l'une quelconque des revendications 1 à 7, dans lequel le mécanisme de maintien (90*, 90a*, 90b*) comprend un mécanisme de sollicitation (90*, 90a*, 90b*), de préférence au moins deux éléments ressorts (90a*, 90b*), chacun d'entre eux étant agencé sur des côtés opposés de l'étrier de frein (30*), configuré pour solliciter l'étrier de frein (30*) dans une position prédéterminée sur le support (40*) dans la direction de freinage.

11. Dispositif de frein (1*) selon l'une des revendications 2 à 7 et la revendication 10, dans lequel l'étrier de frein (30*) comprend un élément de réglage (80a*, 80b*) pour chacun des pistons esclaves (50a, 50b), de préférence l'élément de réglage de frein secondaire (80a*) selon la revendication 5 et un élément de réglage supplémentaire pour le piston esclave (50a, 50b) respectivement opposé.

12. Procédé de fonctionnement d'un dispositif de frein (1, 1*) selon l'une quelconque des revendications 1 à 11, dans lequel le procédé est **caractérisé par** les étapes suivantes :
le maintien du au moins un étrier de frein (30, 30*) par le mécanisme de maintien (32, 90*, 90a*, 90b*) dans une position prédéterminée dans la direction de freinage par rapport au support (40, 40*) au moins dans le mode de freinage primaire, et
la permission du mouvement relatif du au moins un étrier de frein (30, 30*) par rapport au support (40, 40*) au moins dans le mode de freinage secondaire.

13. Procédé selon la revendication 12, dans lequel
le mode de freinage primaire est un mode de freinage de service et le mode de freinage secondaire est un mode de freinage de stationnement.

14. Procédé selon la revendication 12 ou 13, dans lequel
le au moins un étrier de frein (30, 30*) est également maintenu par le mécanisme de maintien (32, 90*, 90a*, 90b*) dans la position prédéterminée dans un mode de repos ou de conduite, et/ou
le mouvement relatif du au moins un étrier de frein (30, 30*) par rapport au support (40, 40*) est également permis dans un mode de centrage d'étrier de frein pour centrer l'étrier de frein (30, 30*) par rapport au disque de frein (10).

15. Procédé selon la revendication 14 pour faire fonctionner un dispositif de frein (1, 1*) selon l'une quelconque des revendications 7 à 11, dans lequel,
dans le mode de repos ou de conduite, le verrou de frein secondaire (31) est dans la position de verrouillage d'élément de frein secondaire et le au moins un étrier de frein (30, 30*) est maintenu par le mécanisme de maintien (32, 90*, 90a*, 90b*), et/ou
dans le mode de centrage d'étrier de frein,
la pression de frein primaire (p_{SB}) est libérée lorsque le verrou de frein secondaire (31) est dans la position de verrouillage d'élément de frein secondaire et le mouvement relatif du au moins un étrier de frein (30, 30*) par rapport au support (40, 40*) est permis,
ensuite, la pression de frein primaire (p_{SB}) est appliquée, et
puis la pression de frein primaire (p_{SB}) est libérée avec le verrou de frein secondaire (31) dans la position de verrouillage d'élément de frein secondaire et le au moins un étrier de frein (30, 30*) maintenu par le mécanisme de maintien (32, 90*, 90a*, 90b*).

16. Procédé selon l'une quelconque des revendications 12 à 15 pour faire fonctionner un dispositif de frein (1,1*) selon l'une quelconque des revendications 7 à 11, dans lequel,
dans le mode de frein primaire, une pression de frein primaire (p_{SB}) est appliquée et libérée avec le verrou de frein secondaire (31) dans la position de verrouillage d'élément de frein secondaire et le au moins un étrier de frein (30, 30*) maintenu par le mécanisme de maintien (32, 90*, 90a*, 90b*), et/ou
dans le mode de frein secondaire,
une pression de frein secondaire est appliquée, la pression de frein primaire (p_{SB}) étant libérée, le verrou de frein secondaire (31) étant dans la position de libération d'élément de frein secondaire et le mouvement relatif du au moins un étrier de frein (30, 30*) par rapport au support (40, 40*) étant permis, et
ladite pression de frein secondaire est de préférence libérée
en appliquant la pression de frein primaire (p_{SB}), le verrou de frein secondaire (31) étant dans la position de libération d'élément de frein secondaire et le mouvement relatif du au moins un étrier de frein (30, 30*) par rapport au support (40, 40*) étant permis,
en déplaçant ensuite le verrou de frein secondaire (31) dans la position de verrouillage d'élément de frein secondaire et en maintenant le au moins un étrier de frein (30, 30*) avec le mécanisme de maintien (32, 90*, 90a*, 90b*), et
puis en libérant la pression de frein primaire (p_{SB}) avec le verrou de frein secondaire (31) dans la position de verrouillage d'élément de frein secondaire et le au moins un étrier de frein (30, 30*) maintenu par le mécanisme de maintien (32, 90*, 90a*, 90b*).

17. Véhicule pour effectuer le procédé selon l'une quelconque des revendications 12 à 16, dans lequel
le véhicule comprend un dispositif selon l'une quelconque des revendications 1 à 11.

18. Produit de programme informatique présentant des moyens de code qui, lorsqu'ils sont exécutés sur une unité de traitement de données, l'amènent à exécuter le procédé selon l'une quelconque des revendications 12 à 16.

19. Support de stockage destiné à être lu par une unité de traitement de données, dans lequel le support de stockage comprend un produit de programme informatique selon la revendication 18.
